# EUROPÄISCHE PATENTSCHRIFT

(11) **EP 3 583 996 B1**
(45) Veröffentlichungstag und Bekanntmachung des Hinweises auf die Patenterteilung: **10.08.2022**
(21) Anmeldenummer: 18400020.6
(22) Anmeldetag: 18.06.2018
(51) Int. Cl.: B01D 53/14

(54) **VERFAHREN UND ANLAGE ZUR HERSTELLUNG VON SYNGASPRODUKTE**
PROCESS AND EQUIPMENT FOR THE PRODUCTION OF SYNGAS COMPOSITIONS
PROCÉDÉ ET INSTALLATION DE FABRICATION DE GAZ DE SYNTHÈSE

(43) Veröffentlichungstag der Anmeldung: 25.12.2019
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Corbet, Sharon, 60438 Frankfurt (DE); Gubrinski, Alfred, 64390 Erzhausen (DE); Puri, Pankaj, 121004 Faridabad (IN); Rappold, Dorit, 60487 Frankfurt (DE)
(74) Vertreter: Dropsch, Holger

(56) Entgegenhaltungen:
- US-A1- 2007 129 450
- US-A1- 2013 327 990
- Manuele Gatti ET AL: "MULTI-OBJECTIVE OPTIMIZATION OF A SELEXOL (R) PROCESS FOR THE SELECTIVE REMOVAL OF CO2 AND H2S FROM A COAL-DERIVED SYNGAS", PROCEEDINGS OF ECOS 2015- THE 28TH INTERNATIONAL CONFERENCE ON EFFICIENCY, COST OPTIMIZATION, SIMULATION AND ENVIRONMENTAL IMPACT OF ENERGY SYSTEMS, 3. Juli 2015 (2015-07-03), Seiten 1-13, XP055525977, PAU (FRANCE) DOI: 10.1016/j.ces.2018.02.028 Gefunden im Internet: URL:https://www.researchgate.net/publicati on/280304692_Multi-objective_Optimization_ of_a_SelexolR_Process_for_the_Selective_Re moval_of_CO2_and_H2S_from_Coal-derived_Syn gas [gefunden am 2018-11-22]
- Chemcad: "POWER PLANT CARBON CAPTURE WITH CHEMCAD", CHEMSTATIONS, 3. November 2009 (2009-11-03), Seiten 1-26, XP55525018, Gefunden im Internet: URL:https://www.chemstations.com/content/d ocuments/Technical_Articles/Power_Plant_Ca rbon_Capture_with_CHEMCAD.pdf [gefunden am 2018-11-19]
- ZOE KAPETAKI ET AL: "Process simulation of a dual-stage Selexol process for 95% carbon capture efficiency at an integrated gasification combined cycle power plant", INTERNATIONAL JOURNAL OF GREENHOUSE GAS CONTROL, Bd. 39, 1. August 2015 (2015-08-01), Seiten 17-26, XP055525983, AMSTERDAM, NL ISSN: 1750-5836, DOI: 10.1016/j.ijggc.2015.04.015

## Beschreibung

### Gebiet der Erfindung

Die Erfindung betrifft ein Verfahren zur Herstellung mehrerer Gasprodukte unterschiedlicher Zusammensetzung aus Rohsynthesegas durch Gaswäsche mit einem Waschmittel und nachfolgender Kombination einzelner dabei erhaltener Gasströme. Die Erfindung betrifft ferner eine Anlage zur Durchführung eines solchen Verfahrens.

### Stand der Technik

Verfahren zur Abtrennung von unerwünschten Begleitstoffen aus technischen Rohgasen mittels physikalischer oder chemischer Absorption oder Gaswäsche sind aus dem Stand der Technik wohlbekannt. So können mit solchen Verfahren unerwünschte, acide Bestandteile aus durch Vergasung oder Reformierung von kohlenstoffhaltigen Einsatzstoffen erzeugten Rohsynthesegasen, beispielsweise Kohlendioxid (CO₂) und Schwefelwasserstoff (H₂S), aber auch weitere Bestandteile wie Carbonylsulfid (COS) und Cyanwasserstoff (HCN), von den erwünschten Synthesegasbestandteilen Wasserstoff (H₂) und Kohlenmonoxid (CO) sicher bis in den Spurenbereich entfernt werden. Ein bekanntes und häufig angewendetes Verfahren ist das Rectisol-Verfahren, das in Ullmann's Encyclopedia of Industrial Chemistry, 6. Aufl. Bd. 15, S. 399 ff. grundsätzlich beschrieben wird. Im Rectisol-Verfahren erfolgt die Aufnahme der oben erwähnten, unerwünschten Störkomponenten durch kaltes, d. h. signifikant unter Umgebungstemperatur abgekühltes Methanol als Absorbens oder Waschmittel, wobei in einer Absorberkolonne, auch als Waschkolonne bezeichnet, ein intensiver Stoffaustausch zwischen dem Rohgas und dem Absorptionsmittel bzw. Waschmittel erfolgt. Dabei erhöht sich die Löslichkeit der unerwünschten Gasbestandteile drastisch mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität und somit gute Stoff- und Wärmeübertragungseigenschaften aufzuweisen.

Das als Waschmittel verwendete, mit den Störkomponenten beladene Methanol wird im Rectisol-Verfahren über Regenerierungsvorrichtungen im Kreis gefahren. In den Regenerierungsvorrichtungen wird das beladene Methanol von den absorbierten Gasen auf physikalischem Wege befreit. Dabei wird in einem ersten Regenerierungsschritt CO₂ durch Druckentspannung (sogenannte Flashregenerierung) und/oder Strippen mit einem Gas, beispielsweise Stickstoff, aus dem beladenen Methanol-Waschmittel entfernt. In einem weiteren oder alternativen Regenerierungsschritt werden die schwefelhaltigen Gase, COS und H₂S, durch Erhitzen abgetrieben (sogenannte Heissregenerierung). Häufig wird angestrebt, ein möglichst CO₂-freies COS/H₂S-Gas zu erzeugen, da dessen wirtschaftlich interessante Weiterverarbeitung durch eine Vermischung mit CO₂ beeinträchtigt wird.

Beim Rectisol-Verfahren wird zwischen dem Standardverfahren und dem selektiven Rectisol-Verfahren unterschieden. Bei dem Standard-Rectisol-Verfahren werden die Begleitgase COS/H₂S und das CO₂ gemeinsam in einem Absorptionsschritt aus dem Rohsynthesegas abgetrennt. Dagegen werden bei dem sogenannten selektiven Rectisol-Verfahren die schwefelhaltigen Begleitgase COS/H₂S und das CO₂ jeweils in separaten, nacheinander ablaufenden Absorptionsschritten aus dem Rohsynthesegas abgetrennt. Diese selektive Absorption wird durch eine geeignete Einstellung der Verfahrensparameter, insbesondere des Mengenverhältnisses von Waschmittel und zu absorbierendem Gas, ermöglicht. Der Vorteil der selektiven Absorption liegt darin, dass das COS/H₂S- und das CO₂-Gas schon bei der Absorption zum größten Teil getrennt gehalten werden und nur der kleinere Teil bei der Regenerierung des Methanols getrennt werden muss. Auf diese Weise wird zudem die Gewinnung des enthaltenen Schwefels mit Hilfe von nachgeschalteten Verfahren wie beispielsweise dem Claus-Verfahren ermöglicht.

Die Flashregenerierung des mit aciden Gasbestandteilen beladenen Waschmittels kann mehrstufig erfolgen, wobei bei der Entspannung mechanische Arbeit und Kälte gewonnen werden können. So wird in der US-Patentschrift US 5067 972 vorgeschlagen, bei einem Verfahren zur Abtrennung acider Bestandteile wie CO₂, H₂S und CÖS aus einem Gasstrom diesen mittels eines physikalischen Waschmittels zu behandeln. Das mit den aciden Gasbestandteilen beladene Waschmittel wird einer Kaskade von Flashbehältern mit stufenweise sinkendem Druck zugeführt und die dabei freiwerdenden Flashgase zwischen jeweils zwei Stufen einer mehrstufigen Entspannungsturbine zugeführt. Hierdurch werden mechanische Arbeit und Prozesskälte gewonnen.

Das am Ende der Entspannungskaskade erhaltene Flashgas wird dabei allerdings lediglich als Kühlmittel für das in das Verfahren eingeleitete Rohgas benutzt und dann aus dem Verfahren ausgeleitet. Nachteilig ist dabei, dass keine weitere, beispielsweise stoffliche Nutzung der erhaltenen Flashgase gelehrt wird.

Nachteilig ist es ferner, dass mittels der beschriebenen Gasreinigungsverfahren ein Reinsynthesegas mit fester Zusammensetzung gewonnen wird. Zwar kann durch CO-Konvertierung (auch als CO-Shift bezeichnet) nach Zugabe von Wasserdampf und Inkontaktbringen mit einem geeigneten Katalysator die Zusammensetzung in Richtung auf wasserstoffreichere Gemische verändert werden, wie es in Ullmann's Encyclopedia of Industrial Chemistry, 6. Aufl. Bd. 15, Kapitel 5.1 "Carbon Monoxyde Shift Conversion", S. 382 ff. beschrieben wird. Da aber das Reinsynthesegas nach Durchlaufen das Waschverfahrens in der Regel mit einer Temperatur nahe Umgebungstemperatur erhalten wird, ist zur Durchführung der CO-Konvertierung in der Regel ein Wiederaufheizen des Reinsynthesegases erforderlich. Hierzu werden zusätzliche Apparate wie Heizer bzw. Wärmetauscher benötigt und es muss die entsprechende Heizenergie wieder zugeführt werden, die dem Rohsynthesegas beim Abkühlen vor Einteilen in die Waschvorrichtung entzogen wurde.

### Beschreibung der Erfindung

Aufgabe der Erfindung ist es daher, ein Verfahren anzugeben, das die genannten Nachteile der aus dem Stand der Technik bekannten Verfahren vermeidet und bei dem insbesondere mehrere Reingasprodukte unterschiedlicher Zusammensetzung, beispielsweise in Bezug auf das in den verschiedenen Teilprodukten vorhandene H₂/CO-Verhältnis, aus dem Rohsynthesegas gewonnen werden können.

Diese Aufgabe wird im Wesentlichen durch eine Anlage mit den Merkmalen der unabhängigen Ansprüchen 9 und 10 sowie durch ein Verfahren mit den Merkmalen der unabhängigen Ansprüchen 1 und 2 gelöst.

Weitere, insbesondere bevorzugte Ausgestaltungen des erfindungsgemäßen Verfahrens finden sich in den Unteransprüchen. Die Erfindung betrifft ferner eine Anlage zur Durchführung eines solchen Verfahrens.

### Erfindungsgemäßes Verfahren:

Verfahren zur Reinigung eines geshifteten und eines ungeshifteten Rohsynthesegases durch Gaswäsche mit einem Waschmittel und zur Erzeugung mehrerer Synthesegasproduktströme mit unterschiedlichem H₂/CO-Verhältnis, umfassend folgende Schritte:
(a) Bereitstellen und Zuführen des geshifteten und des ungeshifteten Rohsynthesegases zu jeweils einem separaten Vorwäscher zur Entfernung von Spurenkomponenten wie NH₃, HCN, Mercaptane, BTX-Aromaten,
(b) Zuführen der gasförmigen Kopfprodukte der Vorwäscher zu jeweils einem separaten H₂S-Wäscher zur Entfernung von H₂S,
(c) Zuführen der gasförmigen Kopfprodukte der H₂S-Wäscher zu jeweils einem separaten CO₂-Wäscher zur Entfernung von CO₂,
(d1) Aufteilen des gasförmigen Kopfproduktstroms des CO₂-Wäschers des ungeshifteten Rohsynthesegases in einen ersten Synthesegas-Teilproduktstrom und in einen zweiten Synthesegas-Teilproduktstrom, der zur Druckerniedrigung über einen vorzugsweise mehrstufigen Expander geführt wird, wobei mechanische Arbeit und
Kälte gewonnen werden und ein expandierter zweiter Synthesegas-Teilproduktstrom erhalten wird,
(d2) Aufteilen des gasförmigen Kopfproduktstroms des CO₂-Wäschers des geshifteten Rohsynthesegases in einen dritten Synthesegas-Teilproduktstrom und in einen vierten Synthesegas-Teilproduktstrom,
(e) Zuführen der flüssigen Sumpfprodukte der separaten Vorwäscher zu einem Mitteldruck-Vorwäsche-Flashbehätter, Zuführen des gasförmigen Kopfprodukts des Mitteldruck-Vorwäsche-Flashbehälters zu einem Rekompressor, Zuführen des flüssigen Sumpfprodukts des Mitteldruck-Vorwäsche-Flashbehälters zu einem Niederdruck-Vorwäsche-Flashbehälter, Zuführen des gasförmigen Kopfprodukts des Niederdruck-Vorwäsche-Flashbehälters zum Rekompressor, Zuführen des flüssigen Sumpfprodukts des Niederdruck-Vorwäsche-Flashbehälters zu mindestens einer Vorrichtung zur Flashregenerierung und/oder Heissregenerierung des Waschmittels,
(f) Zuführen der flüssigen Sumpfprodukte der separaten H₂S-Wäscher zu einem Mifteldruck-H₂S-Flashbehälter, Zuführen des gasförmigen Kopfprodukts des Mitteldruck-H₂S-Flashbehälters zum Rekompressor, Zuführen des flüssigen Sumpfprodukts des Mitteldruck-H₂S-Flashbehäfters zu einem Niederdruck-H₂S-Flashbehälter, Zuführen des gasförmigen Kopfprodukts des Niederdruck-H₂S-Flashbehälters zum Rekompressor, Zuführen des flüssigen Sumpfprodukts des Niederdruck-H₂S-Flashbehälters zu mindestens einer Vorrichtung zur Flashregenerierung und/oder Heissregenerierung des Waschmittels,
(g) Zuführen der flüssigen Sumpfprodukte der separaten CO₂-Wäscher zu einem Mitteldruck-CO₂-Flashbehälter, Zuführen des gasförmigen Kopfprodukts des Mitteldruck-CO₂-Flashbehälters zum Rekompressor, Zuführen des flüssigen Sumpfprodukts des Mitteldruck-CO₂-Flashbehälters zu einem Niederdruck-CO₂-Flashbehälter, Zuführen des gasförmigen Kopfprodukts des Niederdruck-CO₂-Flashbehälters zum Niederdruck-H₂S-Flashbehälter und/oder zum Rekompressor, Zuführen des flüssigen Sumpfprodukts des Niederdruck-CO₂-Flashbehälters zu mindestens einer Vorrichtung zur Flashregenerierung und/oder Heissregenerierung des Waschmittels,
(h) Rückführen des mittels des Rekompressors verdichteten Gasstroms zum Vorwäscher für das ungeshiftete und/oder das geshiftete Rohsynthesegas.

### Erfindungsgemäße Anlage:

Anlage zur Reinigung eines geshifteten und eines ungeshifteten Rohsynthesegases durch Gaswäsche mit einem Waschmittel und zur Erzeugung mehrerer Synthesegasproduktströme mit unterschiedlichem H₂/CO-Verhältnis, umfassend folgende, miteinander in Fluidverbindung stehende Bestandteile und Baugruppen:
(a) Mittel zum Bereitstellen und Zuführen des geshifteten und des ungeshifteten Rohsynthesegases zu jeweils einem separaten Vorwäscher, wobei die Vorwäscher geeignet sind zur Entfernung von Spurenkomponenten wie NH₃, HCN, Mercaptane, BTX-Aromaten,
(b) Mittel zum Zuführen der gasförmigen Kopfprodukte der Vorwäscher zu jeweils einem separaten H₂S-Wäscher zur Entfernung von H₂S,
(c) Mittel zum Zuführen der gasförmigen Kopfprodukte der H₂S-Wäscher zu jeweils einem separaten CO₂-Wäscher zur Entfernung von CO₂,
(d₁) Mittel zum Aufteilen des gasförmigen Kopfproduktstroms des CO₂-Wäschers des ungeshifteten Rohsynthesegases in einen ersten Teilproduktstrom und in einen zweiten Teilproduktstrom, Mittel zum Einleiten des zweiten Teilproduktstroms in einen mehrstufigen Expander, Mittel zum Ausleiten des expandierten zweiten Teilproduktstroms aus dem Expander,
(d2) Mittel zum Aufteilen des gasförmigen Kopfproduktstroms des CO₂-Wäschers des geshifteten Rohsynthesegases in einen dritten Teilproduktstrom und in einen vierten Teilproduktstrom,
(e) Mittel zum Zuführen der flüssigen Sumpfprodukte der separaten Vorwäscher zu einem Mitteldruck-Vorwäsche-Flashbehälter, Mittel zum Zuführen des gasförmigen Kopfprodukts des Mitteldruck-Vorwäsche-Flashbehälters zu einem Rekompressor, Mittel zum Zuführen des flüssigen Sumpfprodukts des Mitteldruck-Vorwäsche-Flashbehälters zu einem Niederdruck-Vorwäsche-Flashbehälter, Mittel zum Zuführen des gasförmigen Kopfprodukts des Niederdruck-Vorwäsche-Flashbehälters zum Rekompressor, Mittel zum Zuführen des flüssigen Sumpfprodukts des Niederdruck-Vorwäsche-Flashbehälters zu mindestens einer Vorrichtung zur Flashregenerierung und/oder Heissregenerierung des Waschmittels,
(f) Mittel zum Zuführen der flüssigen Sumpfprodukte der separaten H₂S-Wäscher zu einem Mitteldruck-H₂S-Flashbehälter, Mittel zum Zuführen des gasförmigen Kopfprodukts des Mitteldruck-H₂S-Flashbehälters zum Rekompressor, Mittel zum Zuführen des flüssigen Sumpfprodukts des Mitteldruck-H₂S-Flashbehälters zu einem Niederdruck-H₂S-Flashbehälter, Mittel zum Zuführen des gasförmigen Kopfprodukts des Niederdruck-H₂S-Flashbehälters zum Rekompressor, Mittel zum Zuführen des flüssigen Sumpfprodukts des Niederdruck-H₂S-Flashbehälters zu mindestens einer Vorrichtung zur Flashregenerierung und/oder Heissregenerierung des Waschmittels,
(g) Mittel zum Zuführen der flüssigen Sumpfprodukte der separaten CO₂-Wäscher zu einem Mitteldruck-CO₂-Flashbehälter, Mittel zum Zuführen des gasförmigen Kopfprodukts des Mitteldruck-CO₂-Flashbehälters zum Rekompressor, Mittel zum Zuführen des flüssigen Sumpfprodukts des Mitteldruck-CO₂-Flashbehälters zu einem Niederdruck-CO₂-Flashbehälter, Mittel zum Zuführen des gasförmigen Kopfprodukts des Niederdruck-CO₂-Flashbehälters zum Niederdruck-H₂S-Flashbehälter und/oder zum Rekompressor, Mittel zum Zuführen des flüssigen Sumpfprodukts des Niederdruck-CO₂-Flashbehälters zu mindestens einer Vorrichtung zur Flashregenerierung und/oder zur Heissregenerierung des Waschmittels,
(h) Mittel zum Rückführen des mittels des Rekompressors verdichteten Gasstroms zum Vorwäscher für das ungeshiftete und/oder das geshiftete Rohsynthesegas.

Unter geshiftetem bzw. ungeshiftetem Synthesegas wird dabei ein Synthesegas verstanden, das der CO-Konvertierung unterzogen bzw. nicht unterzogen wurde. Die zur Durchführung der CO-Konvertierung erforderlichen Reaktionsbedingungen sind dem Fachmann bekannt und werden in der Fachliteratur beschrieben.

Unter Waschmittel, synonym Absorptionsmittel oder Lösungsmittel, werden im Rahmen der vorliegenden Erfindung Stoffe oder Stoffgemische verstanden, die unter Verfahrensbedingungen als Flüssigkeit vorliegen, eine Absorptionskapazität für die aus dem Gas abzuscheidenden Komponenten aufweisen und mittels physikalischer Methoden, beispielsweise durch Flashen oder mittels Heissregenerierung, regeneriert werden können.

Unter Flashen wird eine rasche, bevorzugt schlagartige Druckentspannung einer Flüssigkeit verstanden, die bevorzugt beim Eintreten in einen Behälter über einen Durchflussbegrenzer, beispielsweise ein Ventil, erfolgt. Die dabei freigesetzten Gase werden als Flashgase bezeichnet.

Als Rekompressor wird ein ein- oder mehrstufiger Verdichter bezeichnet, dessen Aufgabe es ist, den Druck eines Gasstroms von einem niedrigen Wert auf einen höheren Wert, z. B. den Eintrittsdruck des Rohsynthesegases, zu erhöhen.

Das Zuführen eines Stoffstroms zum Expander umfasst auch dessen mindestens teilweises Zuführen, während der Rest des Stoffstroms beispielsweise zum Rekompressor geführt wird.

Der Vorwäscher, der H₂S-Wäscher und der CO₂-Wäscher müssen nicht zwangsweise als separate, über Rohrleitungen verbundene Apparate ausgeführt werden, sondern können im Sinne der vorliegenden Erfindung auch Abschnitte einer oder mehrerer integrierter Absorptionskolonnen sein.

Beim Rückführen des mittels des Rekompressors verdichteten Gasstroms zum Vorwäscher für das Rohsynthesegas kann der Gasstrom über eine separate Leitung direkt in den Vorwäscher geführt werden. Alternativ kann die Rückführleitung in die Rohsynthesegas-Zuführleitung einmünden, so dass eine Vormischung des rückgeführten Gases mit dem Rohsynthesegas vor Eintreten in die Waschvorrichtung erfolgt.

Unter Fluidverbindung zwischen zwei Bereichen wird jegliche Art von Verbindung verstanden, die es ermöglicht, dass ein Fluid, beispielsweise das flüssige Waschmittel, von dem einen zu dem anderen der beiden Bereiche strömen kann, unbeachtlich etwaiger zwischengeschalteter Bereiche, Bauteile, Armaturen oder Vorrichtungen.

Unter Mitteln zum Bereitstellen, Zuführen oder Ausleiten von Stoffströmen zu bzw. aus Verfahrensstufen bzw. Anlagenteilen werden alle Vorrichtungen, Bauteile und Apparate verstanden, deren Nutzung der Fachmann in der jeweiligen Situation in Betracht zieht, insbesondere Vorratsbehälter, Rohrleitungen, Absperr- und Dosiervorrichtungen wie beispielsweise Ventile, Fördervorrichtungen wie beispielsweise Pumpen, Gebläse, Verdichter.

Etwaige Druckangaben in der Einheit bar(a) beziehen sich auf den Absolutdruck in bar, absolut, sofern nicht im Einzelfall anders angegeben.

Die Erfinder haben erkannt, dass es vorteilhaft ist, einen Teil des Rohsynthesegases einer als Rohgas-CO-Shift ausgestalteten CO-Konvertierung zu unterziehen.

Das geshiftete und das ungeshiftete Rohsynthesegases werden nachfolgend in zwei getrennten Gaswaschvorrichtungen behandelt. Dabei ist es vorteilhaft, dass hinsichtlich der Regenerierung der beladenen Waschmittel auf dieselben Anlagenbestandteile und Vorrichtungen zurückgegriffen werden kann, da diese auch bei der Behandlung nur eines Rohsynthesegases zwangsweise vorhanden sind. Hierdurch werden entsprechende Synergien bei der Behandlung zweier verschiedener Rohsynthesegase unterschiedlicher Zusammensetzung erhalten.

Durch entsprechendes Zusammenführen des geshifteten und des ungeshifteten Reinsynthesegases können unterschiedliche Endproduktströme erhalten werden, beispielsweise ein Methanol-Synthesegasproduktstrom mit dem für die Methanol-Synthese benötigten H₂/CO-Verhältnis, ein Wasserstoffproduktstrom und ein Brenngasproduktstrom. Dies bietet hinsichtlich der Breite der Produktpalette Vorteile im Vergleich zu einem Verfahren, bei dem nur ein einziges Rohsynthesegas fester Zusammensetzung verarbeitet wird.

Der Erfindung liegt ferner die Erkenntnis zugrunde, dass die erhaltenen Flashgase durch Rückführen in das in das Gaswaschverfahren eintretende Rohsynthesegas auch stofflich genutzt werden können. Die Flashgase enthalten noch Anteile der Wertkomponenten CO und H₂ und können durch die erfindungsgemäße Rückführung zum geshifteten bzw. ungeshifteten Rohsynthesegas ebenfalls mindestens teilweise in die Synthesegas-Teilproduktströme gelangen. Auf diese Weise verbessert sich die Gesamtbilanz des Verfahrens für diese Wertkomponenten.

In einer speziellen Ausgestaltung des erfindungsgemäßen Verfahrens gemäß Anspruch 2 bzw. der erfindungsgemäßen Anlage gemäß Anspruch 10 wird nur ein Teil der Flashgase durch Rückführen in das in das Gaswaschverfahren eintretende Rohsynthesegas stofflich genutzt und ein anderer Teil zu einem Expander, beispielsweise einer mehrstufigen Entspannungsturbine, geführt. Auf diese Weise wird ein günstiger Kompromiss zwischen stofflicher und energetischer Nutzung der Flashgase erhalten.

### Weitere bevorzugte Ausgestaltungen der Erfindung

Eine bevorzugte Ausgestaltung des erfindungsgemäßen Verfahrens ist dadurch gekennzeichnet, dass das Waschmittel eine oder mehrere Komponenten ausgewählt aus der folgenden Gruppe enthält: Methanol, N-Methylpyrrolidon (NMP), sekundäre Amine, vorzugsweise Diethanolamin, tertiäre Amine, vorzugsweise Methyldiethanolamin, Polyethylenglycol-dialkylether, vorzugsweise Polyethylenglycol-dimethylether. Alle diese Absorptionsmittel dienen der Absorption von Kohlendioxid und Schwefelverbindungen, sind chemisch stabil und gegenüber den abzuscheidenden Stoffen chemisch inert und können mittels Druckentspannung bzw. Heissregenerierung regeneriert werden.

Eine weitere bevorzugte Ausgestaltung des erfindungsgemäßen Verfahrens ist dadurch gekennzeichnet, dass der erste und/oder der dritte Synthesegas-Teilproduktstrom mindestens teilweise einem Methanol-Synthesegasproduktstrom zugeschlagen werden oder einen Methanol-Synthesegasproduktstrom bilden.

Besonders bevorzugt werden dabei der erste und der dritte Synthesegas-Teilproduktstrom mindestens teilweise einem Methanol-Synthesegasproduktstrom zugeschlagen, wobei der jeweilige Anteil so gewählt wird, dass das für die Methanol-Synthese benötigte H₂/CO-Verhältnis eingestellt wird. Da der erste Teilproduktstrom dem ungeshifteten Rohsynthesegas und der dritte Teilproduktstrom dem geshifteten Rohsynthesegas entstammt und letzterer somit wasserstoffreicher ist, kann durch eine entsprechende Kombination beider Ströme das für die Methanol-synthese gewünschte H₂/CO-Verhältnis genau eingestellt werden.

Eine weitere bevorzugte Ausgestaltung des erfindungsgemäßen Verfahrens ist dadurch gekennzeichnet, dass der zweite expandierte Synthesegas-Teilproduktstrom einem Brenngasproduktstrom zugeschlagen wird oder einen Brenngasproduktstrom bildet.

Bevorzugt wird der vierte Synthesegas-Teilproduktstrom einem Wasserstoffproduktstrom zugeschlagen oder bildet einen Wasserstoffproduktstrom. Der vierte Teilproduktstrom entstammt dem geshifteten Rohsynthesegas und ist somit gegenüber ungeshiftetem Synthesegas wasserstoffreicher.

Als besonders vorteilhaft hat es sich herausgestellt, wenn der Rekompressor mehrstufig ausgeführt ist, wobei die gasförmigen Kopfprodukte aus den Niederdruck-Flashbehältern der ersten Stufe und die gasförmigen Kopfprodukte aus den Mitteldruck-Flashbehältern einer nachfolgenden Stufe des mehrstufigen Rekompressors zugeführt werden. Auf diese Weise werden die Flashgase energetisch optimiert verdichtet, da sie der entsprechenden, ein ähnliches Druckniveau aufweisenden Stufe des mehrstufigen Rekompressors zugeführt werden.

### Ausführungsbeispiel

Weitere Merkmale, Vorteile und Anwendungsmöglichkeiten der Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine schematische Darstellung des erfindungsgemäßen Verfahrens bzw. der erfindungsgemäßen Anlage nach einer ersten Ausgestaltung,
- Fig. 2: eine schematische Darstellung des erfindungsgemäßen Verfahrens bzw. der erfindungsgemäßen Anlage nach einer zweiten Ausgestaltung.

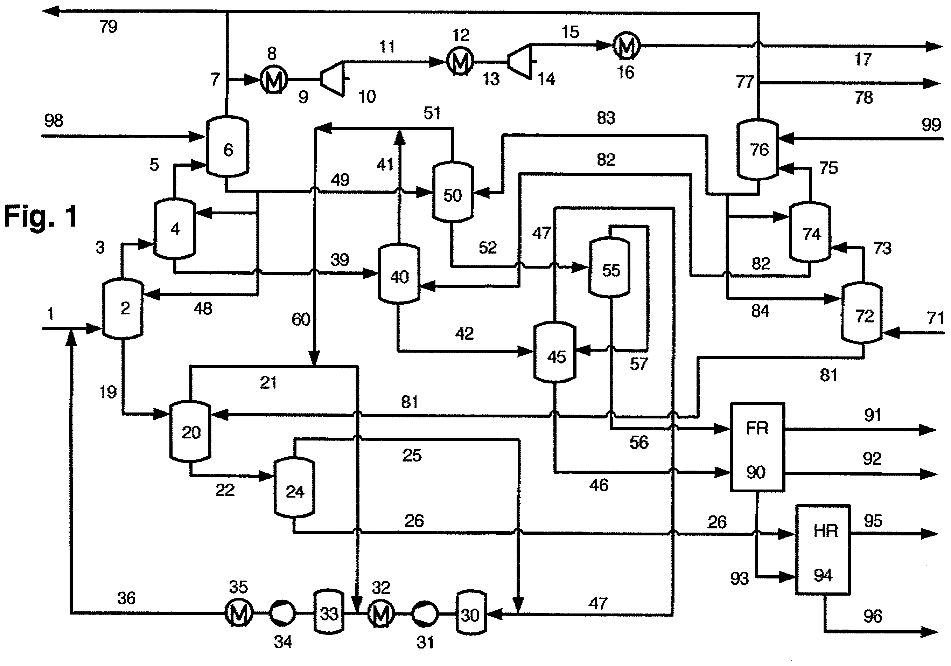

In der in Fig. 1 gezeigten, schematischen Darstellung des erfindungsgemäßen Verfahrens bzw. der erfindungsgemäßen Anlage nach einer ersten Ausgestaltung wird ungeshiftetes Rohsynthesegas über Leitung 1 bzw. geshiftetes Rohsynthesegas über Leitung 71 zwei separaten Waschvorrichtungen, umfassend die Wäscher 2, 4 und 6 bzw. 72, 74 und 76, zugeführt. Die einzelnen Wäscher können dabei als separate Apparate oder auch als Bereiche einer integrierten Wasch- bzw. Absorptionskolonne ausgestaltet werden. Als Waschmittel wird im vorliegenden Ausführungsbeispiel kaltes Methanol verwendet, dass über Leitungen 98 bzw. 99 zu den Waschvorrichtungen geführt wird. Dabei werden zumeist mehrere Methanolströme verschiedener Reinheits- bzw. Regenerierungsgrade der Waschvorrichtung an verschiedenen Stellen in dem Fachmann bekannter Weise zugeführt (bildlich nicht dargestellt).

Über Leitung 1 tritt das ungeshiftete Rohsynthesegas mit einem typischen Druck von 20 bis 70 bar(a) in den Vorwäscher 2 zur Entfernung von Spurenkomponenten wie NH₃ und HCN ein und wird dort mit über Leitung 48 herangeführtem, mit aciden Gasbestandteilen teilbeladenen Methanol gewaschen. Das Kopfprodukt des Vorwäschers 2 wird über Leitung 3 dem H₂S-Wäscher 4 zugeführt und dort ebenfalls mit teilbeladenem Methanol gewaschen. Das Kopfprodukt des H₂S-Wäschers 4 wird über Leitung 5 dem CO₂-Wäscher 6 zugeführt und dort mit Methanol hoher Reinheit gewaschen, das über Leitung 98 herangeführt und durch heißregeneriertes Methanol, frisches Reinmethanol oder Mischungen davon gebildet wird. Ein Teil des Kopfprodukts des CO₂-Wäschers 6 wird über Leitung 7 einem als zweistufige Entspannungsturbine ausgestalteten Expander, umfassend die Kühler 8, 12, 16, die Turbinenstufen 10, 14 und die internen Leitungen 9, 11, 13, 15, zugeführt. In diesem wird das gereinigte Synthesegas auf einen Druck von typischerweise 5 bar(a) entspannt, wobei Kälte und mechanische Arbeit zurückgewonnen werden. Nicht bildlich dargestellt sind üblicherweise vorhandene Kondensatabscheider nach jeder Entspannungsstufe. Hier anfallendes Kondensat wird dabei an eine Stelle der Anlage zurückgeführt, in der Flüssigkeiten bei ähnlichem Druck verarbeitet werden; beispielsweise sind dies die Flashbehälter. Über Leitung 17 wird das entspannte Reinsynthesegas aus dem Verfahren ausgeleitet und der weiteren Behandlung oder Verarbeitung zugeführt. Beispielsweise kann das so erhaltene Reinsynthesegas als Brenngas genutzt werden. Der verbliebene Teil des Kopfprodukts des CO₂-Wäschers des ungeshifteten Rohsynthesegases 6 wird über Leitung 7 und nach Vereinigung mit dem über Leitung 77 herangeführten Gas über Leitung 79 als Methanol-Synthesegas aus dem Verfahren ausgeleitet.

Über Leitung 71 tritt das geshiftete Rohsynthesegas mit einem typischen Druck von 20 bis 70 bar(a) in den Vorwäscher 72 zur Entfernung von Spurenkomponenten wie NH₃ und HCN ein und wird dort mittels über Leitung 84 herangeführtes, mit aciden Gasbestandteilen teilbeladenes Methanol gewaschen. Das Kopfprodukt des Vorwäschers 72 wird über Leitung 73 dem H₂S-Wäscher 74 zugeführt und dort ebenfalls mit teilbeladenem Methanol gewaschen. Das Kopfprodukt des H₂S-Wäschers 74 wird über Leitung 75 dem CO₂-Wäscher 76 zugeführt und dort mit Methanol hoher Reinheit gewaschen, das über Leitung ,99 herangeführt und durch heißregeneriertes Methanol, frisches Reinmethanol oder Mischungen davon gebildet wird. Das Kopfprodukt des CO₂-Wäschers 76 wird über Leitung 77 abgeführt und in zwei Teile aufgeteilt. Ein erster Teil wird über Leitung 78 als Rohwasserstoffprodukt aus dem Verfahren ausgeleitet und der weiteren, bildlich nicht dargestellten Verarbeitung bzw. Behandlung zugeführt. Ein zweiter Teil wird über Leitung 77 abgeleitet und mit dem verbliebenen Anteil des Kopfprodukts des CO₂-Wäschers 6 zusammengeführt und über Leitung 79 aus dem Verfahren ausgeleitet.

Das in den Vorwäschern 2, 72 mit Spurenkomponenten wie NH₃ und HCN beladene Methanol-Waschmittel wird über Leitungen 19, 81 dem Mitteldruck-Vorwäsche-Flashbehälter 20 zugeführt und dort auf typischerweise 15 bis 40 bar(a) entspannt. Das dabei erhaltene, gasförmige Kopfprodukt wird über Leitung 21 zur zweiten Stufe eines Rekompressors geführt, der die Kühler 32, 35, die Verdichterstufen 31, 34 und die Abscheider 30, 33 umfasst. Verbindungsleitungen innerhalb des Rekompressors sind nicht mit eigenen Bezugszeichen gekennzeichnet. Das flüssige Sumpfprodukt des Mitteldruck-Vorwäsche-Flashbehälters 20 wird über Leitung 22 zu einem Niederdruck-Vorwäsche-Flashbehälter 24 geführt und dort auf typischerweise 1,5 bis 15 bar(a) entspannt. Das dabei erhaltene, gasförmige Kopfprodukt wird über Leitung 25 zur ersten Stufe des Rekompressors geführt und dort in den Abscheider 30 eingeführt. Das flüssige Sumpfprodukt des Niederdruck-Vorwäsche-Flashbehälters 24 wird über Leitung 26 zu einer Heissregenerierungsvorrichtung 94 geführt.

Das in den H₂S-Wäschern 4, 74 mit Schwefelwasserstoff beladene Methanol-Waschmittel wird über Leitungen 39, 82 einem Mitteldruck-H₂S-Flashbehälter 40 zugeführt und dort auf typischerweise 15 bis 40 bar(a) entspannt. Das dabei erhaltene, gasförmige Kopfprodukt wird über Leitungen 41, 51, 60 und 21 zur zweiten Stufe des Rekompressors geführt. Das flüssige Sumpfprodukt des Mitteldruck-H₂S-Flashbehälters 40 wird über Leitung 42 zu einem Niederdruck-H₂S-Flashbehälter 45 geführt und dort auf typischerweise 1,5 bis 15 bar(a) entspannt. Das dabei erhaltene, gasförmige Kopfprodukt wird über Leitung 47 zur ersten Stufe des Rekompressors geführt und dort in den Abscheider 30 eingeführt. Das flüssige Sumpfprodukt des Niederdruck-H₂S-Flashbehälters 45 wird über Leitung 46 zu einer Flashregenerierungsvorrichtung 90 geführt.

Das in den CO₂-Wäschern 6, 76 mit Kohlendioxid beladene Methanol-Waschmittel wird über Leitungen 49, 83 einem Mitteldruck-CO₂-Flashbehälter 50 zugeführt und dort auf typischerweise 15 bis 40 bar(a) entspannt. Das dabei erhaltene, gasförmige Kopfprodukt wird über Leitungen 51, 60 und 21 zur zweiten Stufe des Rekompressors geführt. Das flüssige Sumpfprodukt des Mitteldruck-CO₂-Flashbehälters 50 wird über Leitung 52 zu einem Niederdruck-CO₂-Flashbehälter 55 geführt und dort auf typischerweise 1,5 bis 15 bar(a) entspannt. Das dabei erhaltene, gasförmige Kopfprodukt wird über Leitung 57 zum Niederdruck-H₂S-Flashbehälter 45 geführt und dort mit dessen Kopfprodukt zusammengeführt. Das flüssige Sumpfprodukt des Niederdruck-CO₂-Flashbehälters 55 wird über Leitung 56 zu der Flashregenerierungsvorrichtung 90 geführt.

Die in den zweistufigen Rekompressor eintretenden Gasströme werden in zwei Druckstufen auf das Druckniveau des Rohsynthesegases verdichtet und über Leitungen 36 und 1 zum Vorwäscher 2 zurückgeführt. Es ist auch möglich, Leitung 36 direkt in den Vorwäscher 2 zu führen.

Das in die Flashregenerierungsvorrichtung 90 einführte, beladene Methanol-Waschmittel wird dort entspannt. Die Entspannung erfolgt in mehreren, bildlich nicht dargestellten Stufen, wobei schließlich ein CO₂-Produktstrom mit hoher CO₂-Reinheit und ein CO₂-Abgasstrom mit geringerer CO₂-Reinheit erhalten und über Leitungen 91 und 92 aus dem Verfahren ausgeleitet werden. Die dabei erforderliche Vorgehensweise und verwendeten Druckstufen sind dem Fachmann an sich bekannt. Ferner wird ein im Wesentlichen mit Schwefelwasserstoff beladenes Methanol-Waschmittel erhalten, das über Leitung 93 zu der Heissregenerierungsvorrichtung 94 geführt wird. Auch diese ist mehrstufig ausgestaltet und bildlich nur schematisch dargestellt, wobei die einzelnen Verfahrensschritte und Verfahrensbedingungen der Heissregenerierung dem Fachmann bekannt sind. Als Produkt der Heissregenerierung wird ein Methanol-Waschmittelstrom hoher Reinheit (sog. Feinwasch-Methanol) erhalten, der - gegebenenfalls nach weiteren Behandlungsschritten und unter Zugabe von Frischmethanol - über Leitungen 98, 99 zu den CO₂-Wäschern 6, 76 zurückgeführt wird. Ferner wird als weiteres Produkt der Heissregenerierung ein Sauergasstrom erhalten, der Schwefelwasserstoff sowie weitere Schwefelkomponenten enthält und über Leitung 95 aus dem Verfahren ausgeleitet und der weiteren Behandlung oder Verarbeitung zugeführt wird. Üblicherweise wird der Sauergasstrom einer nicht bildlich dargestellten, beispielsweise nach dem Claus-Verfahren arbeitenden Schwefelrückgewinnungsanlage zugeführt.

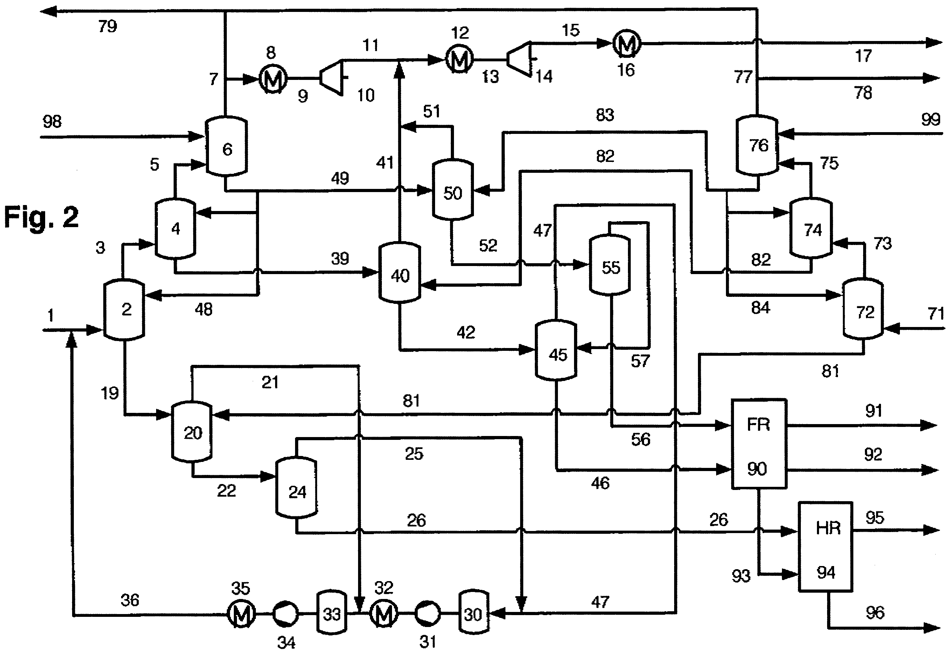

Die in Fig. 2 gezeigte, schematische Darstellung des erfindungsgemäßen Verfahrens bzw. der erfindungsgemäßen Anlage nach einer zweiten Ausgestaltung entspricht weitegehend der Ausgestaltung gemäß Fig. 1. Im Unterschied zu letzterer werden die Kopfprodukte des Mitteldruck-H₂S-Flashbehälters 40 und des Mitteldruck-CO₂-Flashbehälter 50 über Leitungen 41 und 51 zur zweiten Stufe des zweistufigen Expanders geführt. In dieser speziellen Ausgestaltung wird somit nur ein Teil der Flashgase aus dem Mitteldruck-H₂S-Flashbehälter und dem Mitteldruck-CO₂-Flashbehälter durch Rekomprimieren und Rückführen zu dem in das Gaswaschverfahren eintretende Rohsynthesegas stofflich genutzt, wobei der verbliebene Anteil der Flashgase zur Rückgewinnung von Kälte und mechanischer Arbeit zurückgewonnen dient und somit energetisch genutzt wird. Auf diese Weise wird ein günstiger Kompromiss zwischen stofflicher und energetischer Nutzung der Flashgase erhalten.

### Gewerbliche Anwendbarkeit

Mit der Erfindung wird ein Gaswaschverfahren und eine korrespondierende Anlage zur Abtrennung acider Gasbestandteile aus Rohsynthesegas zur Verfügung gestellt, die es ermöglichen, durch Behandlung von geshiftetem und von ungeshiftetem Rohsynthesegas in dem Gaswaschverfahren und durch Kombination der dabei erhaltenen Teilproduktströme mehrere Gasprodukte unterschiedlicher Zusammensetzung zu erzeugen. Zudem werden mit der Erfindung die bei der Entspannung des beladenen Waschmittels erhaltenen Flashgase in vorteilhafter Weise stofflich und/oder energetisch genutzt.

### Bezugszeichenliste

- 1: Leitung
- 2: Vorwäscher
- 3: Leitung
- 4: H₂S=Wäscher
- 5: Leitung
- 6: CO₂-Wäscher
- 7: Leitung
- 8: Kühler
- 9: Leitung
- 10: Turbinenstufe
- 11: Leitung
- 12 .: Kühler
- 13: Leitung
- 14: Turbinenstufe
- 15: Leitung
- 16: Kühler
- 17: Leitung
- 19: Leitung
- 20: Mitteldruck-Vorwäsche-Flashbehälter
- 21: Leitung
- 22: Leitung
- 24: Niederdruck-Vorwäsche-Flashbehälter
- 25: Leitung
- 26: Leitung
- 30: Abscheider
- 31: Verdichterstufe
- 32: Kühler
- 33: Abscheider
- 34: Verdichterstufe
- 35: Kühler
- 36: Leitung
- 39: Leitung
- 40: Mitteldruck-H₂S-Flashbehälter 40
- 41: Leitung
- 42: Leitung
- 45: Niederdruck-H₂S-Flashbehälter
- 46: Leitung
- 47: Leitung
- 49: Leitung
- 50: Mitteldruck-CO₂-Flashbehälter
- 51: Leitung
- 52: Leitung
- 55: Niederdruck-CO₂-Flashbehälter
- 56: Leitung
- 57: Leitung
- 60: Leitung
- 71: Leitung
- 72: Vorwäscher
- 73: Leitung
- 74: H₂S-Wäscher
- 75: Leitung
- 76: CO₂-Wäscher
- 77: Leitung
- 78: Leitung
- 79: Leitung
- 81: Leitung
- 82: Leitung
- 83: Leitung
- 84: Leitung
- 90: Flashregenerierungsvorrichtung
- 91: Leitung
- 92: Leitung
- 93: Leitung
- 94: Heissregenerierungsvorrichtung
- 95: Leitung
- 96: Leitung
- 98: Leitung
- 99: Leitung

## Patentansprüche

1. Verfahren zur Reinigung eines geshifteten (71) und eines ungeshifteten (1) Rohsynthesegases durch Gaswäsche mit einem Waschmittel und zur Erzeugung mehrerer Synthesegasproduktströme (17, 78, 79) mit unterschiedlichem H₂/CO-Verhältnis, umfassend folgende Schritte:
(a) Bereitstellen und Zuführen des geshifteten und des ungeshifteten Rohsynthesegases zu jeweils einem separaten Vorwäscher (2, 72) zur Entfernung von Spurenkomponenten wie NH₃, HCN, Mercaptane, BTX-Aromaten,
(b) Zuführen der gasförmigen Kopfprodukte (3, 73) der Vorwäscher zu jeweils einem separaten H₂S-Wäscher (4, 74) zur Entfernung von H₂S,
(c) Zuführen der gasförmigen Kopfprodukte (5, 75) der H₂S-Wäscher (4, 74) zu jeweils einem separaten CO₂-Wäscher (6, 76) zur Entfernung von CO₂,
(d1) Aufteilen des gasförmigen Kopfproduktstroms (7) des CO₂-Wäschers (6) des ungeshifteten Rohsynthesegases in einen ersten Synthesegas-Teilproduktstrom (7, 79) und in einen zweiten Synthesegas-Teilproduktstrom (7, 9), der zur Druckerniedrigung über einen vorzugsweise mehrstufigen Expander (10, 14) geführt wird, wobei mechanische Arbeit und Kälte gewonnen werden und ein expandierter zweiter Synthesegas-Teilproduktstrom (15, 17) erhalten wird,
(d2) Aufteilen des gasförmigen Kopfproduktstroms (77) des CO₂-Wäschers (76) des geshifteten Rohsynthesegases in einen dritten Synthesegas-Teilproduktstrom (78) und in einen vierten Synthesegas-Teilproduktstrom (77, 79),
(e) Zuführen der flüssigen Sumpfprodukte (19, 81) der separaten Vorwäscher zu einem Mitteldruck-Vorwäsche-Flashbehälter (20), Zuführen des gasförmigen Kopfprodukts (21) des Mitteldruck-Vorwäsche-Flashbehälters (20) zu einem Rekompressor (31, 34), Zuführen des flüssigen Sumpfprodukts (22) des Mitteldruck-Vorwäsche-Flashbehälters (20) zu einem Niederdruck-Vorwäsche-Flashbehälter (24), Zuführen des gasförmigen Kopfprodukts (25) des Niederdruck-Vorwäsche-Flashbehälters (24) zum Rekompressor (31, 34), Zuführen des flüssigen Sumpfprodukts (26) des Niederdruck-Vorwäsche-Flashbehälters (24) zu mindestens einer Vorrichtung zur Flashregenerierung (90) und/oder Heissregenerierung (94) des Waschmittels,
(f) Zuführen der flüssigen Sumpfprodukte (39, 82) der separaten H₂S-Wäscher (4, 74) zu einem Mitteldruck-H₂S-Flashbehälter (40), Zuführen des gasförmigen Kopfprodukts (41) des Mitteldruck-H₂S-Flashbehälters (40) zum Rekompressor (31, 34), Zuführen des flüssigen Sumpfprodukts (42) des Mitteldruck-H₂S-Flashbehälters (40) zu einem Niederdruck-H₂S-Flashbehälter (45), Zuführen des gasförmigen Kopfprodukts (47) des Niederdruck-H₂S-Flashbehälters (45) zum Rekompressor (31, 34), Zuführen des flüssigen Sumpfprodukts (46) des Niederdruck-H₂S-Flashbehälters (45) zu mindestens einer Vorrichtung zur Flashregenerierung (90) und/oder Heissregenerierung (94) des Waschmittels,
(g) Zuführen der flüssigen Sumpfprodukte (49, 83) der separaten CO₂-Wäscher (6, 76) zu einem Mitteldruck-CO₂-Flashbehälter (50), Zuführen des gasförmigen Kopfprodukts (51) des Mitteldruck-CO₂-Flashbehälters (50) zum Rekompressor (31, 34), Zuführen des flüssigen Sumpfprodukts (52) des Mitteldruck-CO₂-Flashbehälters (50) zu einem Niederdruck-CO₂-Flashbehälter (55), Zuführen des gasförmigen Kopfprodukts (57) des Niederdruck-CO₂-Flashbehälters (55) zum Niederdruck-H₂S-Flashbehälter (45) und/oder zum Rekompressor (31, 34), Zuführen des flüssigen Sumpfprodukts (56) des Niederdruck-CO₂-Flashbehälters (55) zu mindestens einer Vorrichtung zur Flashregenerierung (90) und/oder Heissregenerierung (94) des Waschmittels,
(h) Rückführen des mittels des Rekompressors (31, 34) verdichteten Gasstroms (36) zum Vorwäscher (2, 72) für das ungeshiftete und/oder das geshiftete Rohsynthesegas.

2. Verfahren zur Reinigung eines geshifteten (71) und eines ungeshifteten (1) Rohsynthesegases durch Gaswäsche mit einem Waschmittel und zur Erzeugung mehrerer Synthesegasproduktströme (17, 78, 79) mit unterschiedlichem H₂/CO-Verhältnis, umfassend folgende Schritte:
(a) Bereitstellen und Zuführen des geshifteten und des ungeshifteten Rohsynthesegases zu jeweils einem separaten Vorwäscher (2, 72) zur Entfernung von Spurenkomponenten wie NH₃, HCN, Mercaptane, BTX-Aromaten,
(b) Zuführen der gasförmigen Kopfprodukte (3, 73) der Vorwäscher zu jeweils einem separaten H₂S-Wäscher (4, 74) zur Entfernung von H₂S,
(c) Zuführen der gasförmigen Kopfprodukte (5, 75) der H₂S-Wäscher (4, 74) zu jeweils einem separaten CO₂-Wäscher (6, 76) zur Entfernung von CO₂,
(d1) Aufteilen des gasförmigen Kopfproduktstroms (7) des CO₂-Wäschers (6) des ungeshifteten Rohsynthesegases in einen ersten Synthesegas-Teilproduktstrom (7, 79) und in einen zweiten Synthesegas-Teilproduktstrom (7, 9), der zur Druckerniedrigung über einen vorzugsweise mehrstufigen Expander (10, 14) geführt wird, wobei mechanische Arbeit und Kälte gewonnen werden und ein expandierter zweiter Synthesegas-Teilproduktstrom (15, 17) erhalten wird,
(d2) Aufteilen des gasförmigen Kopfproduktstroms (77) des CO₂-Wäschers (76) des geshifteten Rohsynthesegases in einen dritten Synthesegas-Teilproduktstrom (78) und in einen vierten Synthesegas-Teilproduktstrom (77, 79).
(e) Zuführen der flüssigen Sumpfprodukte (19, 81) der separaten Vorwäscher zu einem Mitteldruck-Vorwäsche-Flashbehälter (20), Zuführen des gasförmigen Kopfprodukts (21) des Mitteldruck-Vorwäsche-Flashbehälters (20) zu einem Rekompressor (31, 34), Zuführen des flüssigen Sumpfprodukts (22) des Mitteldruck-Vorwäsche-Flashbehälters (20) zu einem Niederdruck-Vorwäsche-Flashbehälter (24), Zuführen des gasförmigen Kopfprodukts (25) des Niederdruck-Vorwäsche-Flashbehälters (24) zum Rekompressor (31, 34), Zuführen des flüssigen Sumpfprodukts (26) des Niederdruck-Vorwäsche-Flashbehälters (24) zu mindestens einer Vorrichtung zur Flashregenerierung (90) und/oder Heissregenerierung (94) des Waschmittels,
(f) Zuführen der flüssigen Sumpfprodukte (39, 82) der separaten H₂S-Wäscher (4, 74) zu einem Mitteldruck-H₂S-Flashbehälter (40), Zuführen des gasförmigen Kopfprodukts (41) des Mitteldruck-H₂S-Flashbehälters (40) zur ersten (10, 11) oder einer nachfolgenden Stufe (14, 15) des mehrstufigen Expanders (10, 14) oder in die Leitung (15, 17) stromabwärts des Expanders (10, 14), Zuführen des flüssigen Sumpfprodukts (42) des Mitteldruck-H₂S-Flashbehälters (40) zu einem Niederdruck-H₂S-Flashbehälter (45), Zuführen des gasförmigen Kopfprodukts (47) des Niederdruck-H₂S-Flashbehälters (45) zum Rekompressor (31, 34), Zuführen des flüssigen Sumpfprodukts (46) des Niederdruck-H₂S-Flashbehälters (45) zu mindestens einer Vorrichtung zur Flashregenerierung (90) und/oder Heissregenerierung (94) des Waschmittels,
(g) Zuführen der flüssigen Sumpfprodukte (49, 83) der separaten CO₂-Wäscher (6, 76) zu einem Mitteldruck-CO₂-Flashbehälter (50), Zuführen des gasförmigen Kopfprodukts (51) des Mitteldruck-CO₂-Flashbehälters (50) zur ersten (10, 11) oder einer nachfolgenden Stufe (14, 15) des mehrstufigen Expanders (10, 14) oder in die Leitung (15, 17) stromabwärts des Expanders (10, 14), Zuführen des flüssigen Sumpfprodukts (52) des Mitteldruck-CO₂-Flashbehälters (50) zu einem Niederdruck-CO₂-Flashbehälter (55), Zuführen des gasförmigen Kopfprodukts (57) des Niederdruck-CO₂-Flashbehälters (55) zum Niederdruck-H₂S-Flashbehälter (45) und/oder zum Rekompressor (31, 34), Zuführen des flüssigen Sumpfprodukts (56) des Niederdruck-CO₂-Flashbehälters (55) zu mindestens einer Vorrichtung zur Flashregenerierung (90) und/oder Heissregenerierung (94) des Waschmittels,
(h) Rückführen des mittels des Rekompressors verdichteten Gasstroms (36) zum Vorwäscher (2, 72) für das ungeshiftete und/oder das geshiftete Rohsynthesegas.

3. Verfahren gemäß Anspruch 1 oder 2, **dadurch gekennzeichnet, dass** das Waschmittel eine oder mehrere Komponenten ausgewählt aus der folgenden Gruppe enthält: Methanol, N-Methylpyrrolidon (NMP), sekundäre Amine, vorzugsweise Diethanolamin, tertiäre Amine, vorzugsweise Methyldiethanolamin, Polyethylenglycol-dialkylether, vorzugsweise Polyethylenglycol-dimethylether.

4. Verfahren nach einem der vorigen Ansprüche, **dadurch gekennzeichnet, dass** der erste und/oder der dritte Synthesegas-Teilproduktstrom mindestens teilweise einem Methanol-Synthesegasproduktstrom zugeschlagen werden oder einen Methanol-Synthesegasproduktstrom bilden.

5. Verfahren gemäß Anspruch 4, **dadurch gekennzeichnet, dass** der erste (7, 79) und der dritte Synthesegas-Teilproduktstrom (77, 79) mindestens teilweise einem Methanol-Synthesegasproduktstrom zugeschlagen werden, wobei der jeweilige Anteil so gewählt wird, dass das für die Methanol-Synthese benötigte H₂/CO-Verhältnis eingestellt wird.

6. Verfahren nach einem der vorigen Ansprüche, **dadurch gekennzeichnet, dass** der zweite expandierte Synthesegas-Teilproduktstrom (17) einem Brenngasproduktstrom zugeschlagen wird oder einen Brenngasproduktstrom bildet.

7. Verfahren nach einem der vorigen Ansprüche, **dadurch gekennzeichnet, dass** der vierte Synthesegas-Teilproduktstrom (78) einem Wasserstoffproduktstrom zugeschlagen wird oder einen Wasserstoffproduktstrom bildet.

8. Verfahren nach einem der vorigen Ansprüche, **dadurch gekennzeichnet, dass** der Rekompressor mehrstufig (31, 34) ausgeführt ist, wobei die gasförmigen Kopfprodukte aus den Niederdruck-Flashbehältern (24, 45, 55) der ersten Stufe (31) und die gasförmigen Kopfprodukte aus den Mitteldruck-Flashbehältern (20, 40, 50) einer nachfolgenden Stufe (34) des mehrstufigen Rekompressors zugeführt werden.

9. Anlage zur Reinigung eines geshifteten (71) und eines ungeshifteten (1) Rohsynthesegases durch Gaswäsche mit einem Waschmittel und zur Erzeugung mehrerer Synthesegasproduktströme (17, 78, 79) mit unterschiedlichem H₂/CO-Verhältnis, umfassend folgende, miteinander in Fluidverbindung stehende Bestandteile und Baugruppen:
(a) Mittel zum Bereitstellen und Zuführen des geshifteten und des ungeshifteten Rohsynthesegases zu jeweils einem separaten Vorwäscher (2, 72), wobei die Vorwäscher geeignet sind zur Entfernung von Spurenkomponenten wie NH₃, HCN, Mercaptane, BTX-Aromaten,
(b) Mittel zum Zuführen der gasförmigen Kopfprodukte (3, 73) der Vorwäscher zu jeweils einem separaten H₂S-Wäscher (4, 74) zur Entfernung von H₂S,
(c) Mittel zum Zuführen der gasförmigen Kopfprodukte (5, 75) der H₂S-Wäscher zu jeweils einem separaten CO₂-Wäscher (6, 76) zur Entfernung von CO₂,
(d1) Mittel zum Aufteilen des gasförmigen Kopfproduktstroms (7) des CO₂-Wäschers (6) des ungeshifteten Rohsynthesegases in einen ersten Teilproduktstrom (7, 79) und in einen zweiten Teilproduktstrom (7, 9), Mittel zum Einleiten des zweiten Teilproduktstroms in einen mehrstufigen Expander (10, 14), Mittel zum Ausleiten des expandierten zweiten Teilproduktstroms (15, 17) aus dem Expander,
(d2) Mittel zum Aufteilen des gasförmigen Kopfproduktstroms (77) des CO₂-Wäschers (76) des geshifteten Rohsynthesegases in einen dritten Teilproduktstrom (78) und in einen vierten Teilproduktstrom (77, 79),
(e) Mittel zum Zuführen der flüssigen Sumpfprodukte (19, 81) der separaten Vorwäscher zu einem Mitteldruck-Vorwäsche-Flashbehälter (20), Mittel zum Zuführen des gasförmigen Kopfprodukts (21) des Mitteldruck-Vorwäsche-Flashbehälters (20) zu einem Rekompressor (31, 34), Mittel zum Zuführen des flüssigen Sumpfprodukts (22) des Mitteldruck-Vorwäsche-Flashbehälters (20) zu einem Niederdruck-Vorwäsche-Flashbehälter (24), Mittel zum Zuführen des gasförmigen Kopfprodukts (25) des Niederdruck-Vorwäsche-Flashbehälters (24) zum Rekompressor (31, 34), Mittel zum Zuführen des flüssigen Sumpfprodukts (26) des Niederdruck-Vorwäsche-Flashbehälters (24) zu mindestens einer Vorrichtung zur Flashregenerierung (90) und/oder Heissregenerierung (94) des Waschmittels,
(f) Mittel zum Zuführen der flüssigen Sumpfprodukte (39, 82) der separaten H₂S-Wäscher (4, 74) zu einem Mitteldruck-H₂S-Flashbehälter (40), Mittel zum Zuführen des gasförmigen Kopfprodukts (41) des Mitteldruck-H₂S-Flashbehälters (40) zum Rekompressor (31, 34), Mittel zum Zuführen des flüssigen Sumpfprodukts (42) des Mitteldruck-H₂S-Flashbehälters (40) zu einem Niederdruck-H₂S-Flashbehälter (45), Mittel zum Zuführen des gasförmigen Kopfprodukts (47) des Niederdruck-H₂S-Flashbehälters (45) zum Rekompressor (31, 34), Mittel zum Zuführen des flüssigen Sumpfprodukts (46) des Niederdruck-H₂S-Flashbehälters (45) zu mindestens einer Vorrichtung zur Flashregenerierung (90) und/oder Heissregenerierung (94) des Waschmittels,
(g) Mittel zum Zuführen der flüssigen Sumpfprodukte (49, 83) der separaten CO₂-Wäscher (6, 76) zu einem Mitteldruck-CO₂-Flashbehälter (50), Mittel zum Zuführen des gasförmigen Kopfprodukts (51) des Mitteldruck-CO₂-Flashbehälters (50) zum Rekompressor (31, 34), Mittel zum Zuführen des flüssigen Sumpfprodukts (52) des Mitteldruck-CO₂-Flashbehälters (50) zu einem Niederdruck-CO₂-Flashbehälter (55), Mittel zum Zuführen des gasförmigen Kopfprodukts (57) des Niederdruck-CO₂-Flashbehälters (55) zum Niederdruck-H₂S-Flashbehälter (45) und/oder zum Rekompressor (31, 34), Mittel zum Zuführen des flüssigen Sumpfprodukts (56) des Niederdruck-CO₂-Flashbehälters (55) zu mindestens einer Vorrichtung zur Flashregenerierung (90) und/oder Heissregenerierung (94) des Waschmittels,
(h) Mittel zum Rückführen des mittels des Rekompressors (31, 34) verdichteten Gasstroms zum Vorwäscher (2, 72) für das ungeshiftete und/oder das geshiftete Rohsynthesegas.

10. Anlage zur Reinigung eines geshifteten und eines ungeshifteten Rohsynthesegases durch Gaswäsche mit einem Waschmittel und zur Erzeugung mehrerer Synthesegasproduktströme mit unterschiedlichem H₂/CO-Verhältnis, umfassend folgende Bestandteile und Baugruppen:
(a) Mittel zum Bereitstellen und Zuführen des geshifteten und des ungeshifteten Rohsynthesegases zu jeweils einem separaten Vorwäscher (2, 72), wobei die Vorwäscher geeignet sind zur Entfernung von Spurenkomponenten wie NH₃, HCN, Mercaptane, BTX-Aromaten,
(b) Mittel zum Zuführen der gasförmigen Kopfprodukte (3, 73) der Vorwäscher zu jeweils einem separaten H₂S-Wäscher (4, 74) zur Entfernung von H₂S,
(c) Mittel zum Zuführen der gasförmigen Kopfprodukte (5, 75) der H₂S-Wäscher (4, 74) zu jeweils einem separaten CO₂-Wäscher (6, 76) zur Entfernung von CO₂,
(d1) Mittel zum Aufteilen des gasförmigen Kopfproduktstroms (7) des CO₂-Wäschers (6) des ungeshifteten Rohsynthesegases in einen ersten Teilproduktstrom (7, 79) und in einen zweiten Teilproduktstrom (7, 9), Mittel zum Einleiten des zweiten Teilproduktstroms (7, 9) in einen mehrstufigen Expander (10, 14), Mittel zum Ausleiten des expandierten zweiten Teilproduktstroms (15, 17) aus dem Expander,
(d2) Mittel zum Aufteilen des gasförmigen Kopfproduktstroms (77) des CO₂-Wäschers (76) des geshifteten Rohsynthesegases in einen dritten Teilproduktstrom (78) und in einen vierten Teilproduktstrom (77, 79),
(e) Mittel zum Zuführen der flüssigen Sumpfprodukte (19, 81) der separaten Vorwäscher zu einem Mitteldruck-Vorwäsche-Flashbehälter (20), Mittel zum Zuführen des gasförmigen Kopfprodukts (21) des Mitteldruck-Vorwäsche-Flashbehälters (20) zu einem Rekompressor (31, 34), Mittel zum Zuführen des flüssigen Sumpfprodukts (22) des Mitteldruck-Vorwäsche-Flashbehälters (20) zu einem Niederdruck-Vorwäsche-Flashbehälter(24) , Mittel zum Zuführen des gasförmigen Kopfprodukts (25) des Niederdruck-Vorwäsche-Flashbehälters (24) zum Rekompressor (31, 34), Mittel zum Zuführen des flüssigen Sumpfprodukts (26) des Niederdruck-Vorwäsche-Flashbehälters (24) zu mindestens einer Vorrichtung zur Flashregenerierung (90) und/oder Heissregenerierung (94) des Waschmittels,
(f) Mittel zum Zuführen der flüssigen Sumpfprodukte (39, 82) der separaten H₂S-Wäscher (4, 74) zu einem Mitteldruck-H₂S-Flashbehälter (40), Mittel zum Zuführen des gasförmigen Kopfprodukts (41) des Mitteldruck-H₂S-Flashbehälters (40) zur ersten? oder einer nachfolgenden Stufe des mehrstufigen Expanders (10, 14), Mittel zum Zuführen des flüssigen Sumpfprodukts (42) des Mitteldruck-H₂S-Flashbehälters (40) zu einem Niederdruck-H₂S-Flashbehälter (45), Mittel zum Zuführen des gasförmigen Kopfprodukts (47) des Niederdruck-H₂S-Flashbehälters zum Rekompressor (31, 34), Mittel zum Zuführen des flüssigen Sumpfprodukts (46) des Niederdruck-H₂S-Flashbehälters (45) zu mindestens einer Vorrichtung zur Flashregenerierung (90) und/oder Heissregenerierung (94) des Waschmittels,
(g) Mittel zum Zuführen der flüssigen Sumpfprodukte (49, 83) der separaten CO₂-Wäscher (6, 76) zu einem Mitteldruck-CO₂-Flashbehälter (50), Mittel zum Zuführen des gasförmigen Kopfprodukts (51) des Mitteldruck-CO₂-Flashbehälters (50) zur zweiten oder einer nachfolgenden Stufe des mehrstufigen Expanders (10, 14), Mittel zum Zuführen des flüssigen Sumpfprodukts (52) des Mitteldruck-CO₂-Flashbehälters (50) zu einem Niederdruck-CO₂-Flashbehälter (55), Mittel zum Zuführen des gasförmigen Kopfprodukts (57) des Niederdruck-CO₂-Flashbehälters zum Niederdruck-H₂S-Flashbehälter (45) und/oder zum Rekompressor (31, 34), Mittel zum Zuführen des flüssigen Sumpfprodukts (56) des Niederdruck-CO₂-Flashbehälters (55) zu mindestens einer Vorrichtung zur Flashregenerierung (90) und/oder Heissregenerierung (94) des Waschmittels,
(h) Mittel zum Rückführen des mittels des Rekompressors verdichteten Gasstroms (36) zum Vorwäscher (2, 72) für das ungeshiftete und/oder das geshiftete Rohsynthesegas.

## Claims

1. Process for purifying a shifted crude synthesis gas (71) and an unshifted crude synthesis gas (1) by gas scrubbing with a scrubbing medium and for producing a plurality of synthesis gas product streams (17, 78, 79) having different H₂/CO ratios comprising the steps of:
(a) providing and supplying the shifted crude synthesis gas and the unshifted crude synthesis gas to respective separate prescrubbers (2, 72) for removal of trace components such as NH₃, HCN, mercaptans, BTX aromatics,
(b) supplying the gaseous tops products (3, 73) from the prescrubbers to respective separate H₂S scrubbers (4, 74) for removal of H₂S,
(c) supplying the gaseous tops products (5, 75) from the H₂S scrubbers (4, 74) to respective separate CO₂ scrubbers (6, 76) for removal of CO₂,
(d1) dividing the gaseous tops product stream (7) from the CO₂ scrubber (6) for the unshifted crude synthesis gas into a first synthesis gas partial product stream (7, 79) and into a second synthesis gas partial product stream (7, 9) which for pressure reduction is passed through a preferably multi-stage expander (10, 14) to recover mechanical work and refrigeration and to obtain an expanded second synthesis gas partial product stream (15, 17),
(d2) dividing the gaseous tops product stream (77) from the CO₂ scrubber (76) for the shifted crude synthesis gas into a third synthesis gas partial product stream (78) and into a fourth synthesis gas partial product stream (77, 79),
(e) supplying the liquid bottoms products (19, 81) from the separate prescrubbers to an intermediate-pressure prescrubbing flash vessel (20), supplying the gaseous tops product (21) from the intermediate-pressure prescrubbing flash vessel (20) to a recompressor (31, 34), supplying the liquid bottoms product (22) from the intermediate-pressure prescrubbing flash vessel (20) to a low-pressure prescrubbing flash vessel (24), supplying the gaseous tops product (25) from the low-pressure prescrubbing flash vessel (24) to the recompressor (31, 34), supplying the liquid bottoms product (26) from the low-pressure prescrubbing flash vessel (24) to at least one apparatus for flash regeneration (90) and/or hot regeneration (94) of the scrubbing medium,
(f) supplying the liquid bottoms products (39, 82) from the separate H₂S scrubbers (4, 74) to an intermediate-pressure H₂S flash vessel (40), supplying the gaseous tops product (41) from the intermediate-pressure H₂S flash vessel (40) to the recompressor (31, 34), supplying the liquid bottoms product (42) from the intermediate-pressure H₂S flash vessel (40) to a low-pressure H₂S flash vessel (45), supplying the gaseous tops product (47) from the low-pressure H₂S flash vessel (45) to the recompressor (31, 34), supplying the liquid bottoms product (46) from the low-pressure H₂S flash vessel (45) to at least one apparatus for flash regeneration (90) and/or hot regeneration (94) of the scrubbing medium,
(g) supplying the liquid bottoms products (49, 83) from the separate CO₂ scrubbers (6, 76) to an intermediate-pressure CO₂ flash vessel (50), supplying the gaseous tops product (51) from the intermediate-pressure CO₂ flash vessel (50) to the recompressor (31, 34), supplying the liquid bottoms product (52) from the intermediate-pressure CO₂ flash vessel (50) to a low-pressure CO₂ flash vessel (55), supplying the gaseous tops product (57) from the low-pressure CO₂ flash vessel (55) to the low-pressure H₂S flash vessel (45) and/or to the recompressor (31, 34), supplying the liquid bottoms product (56) from the low-pressure CO₂ flash vessel (55) to at least one apparatus for flash regeneration (90) and/or hot regeneration (94) of the scrubbing medium,
(h) recycling the gas stream (36) compressed by the recompressor (31, 34) to the prescrubber (2, 72) for the unshifted crude synthesis gas and/or the shifted crude synthesis gas.

2. Process for purifying a shifted crude synthesis gas (71) and an unshifted crude synthesis gas (1) by gas scrubbing with a scrubbing medium and for producing a plurality of synthesis gas product streams (17, 78, 79) having different H₂/CO ratios comprising the steps of:
(a) providing and supplying the shifted crude synthesis gas and the unshifted crude synthesis gas to respective separate prescrubbers (2, 72) for removal of trace components such as NH₃, HCN, mercaptans, BTX aromatics,
(b) supplying the gaseous tops products (3, 73) from the prescrubbers to respective separate H₂S scrubbers (4, 74) for removal of H₂S,
(c) supplying the gaseous tops products (5, 75) from the H₂S scrubbers (4, 74) to respective separate CO₂ scrubbers (6, 76) for removal of CO₂,
(d1) dividing the gaseous tops product stream (7) from the CO₂ scrubber (6) for the unshifted crude synthesis gas into a first synthesis gas partial product stream (7, 79) and into a second synthesis gas partial product stream (7, 9) which for pressure reduction is passed through a preferably multi-stage expander (10, 14) to recover mechanical work and refrigeration and to obtain an expanded second synthesis gas partial product stream (15, 17),
(d2) dividing the gaseous tops product stream (77) from the CO₂ scrubber (76) for the shifted crude synthesis gas into a third synthesis gas partial product stream (78) and into a fourth synthesis gas partial product stream (77, 79),
(e) supplying the liquid bottoms products (19, 81) from the separate prescrubbers to an intermediate-pressure prescrubbing flash vessel (20), supplying the gaseous tops product (21) from the intermediate-pressure prescrubbing flash vessel (20) to a recompressor (31, 34), supplying the liquid bottoms product (22) from the intermediate-pressure prescrubbing flash vessel (20) to a low-pressure prescrubbing flash vessel (24), supplying the gaseous tops product (25) from the low-pressure prescrubbing flash vessel (24) to the recompressor (31, 34), supplying the liquid bottoms product (26) from the low-pressure prescrubbing flash vessel (24) to at least one apparatus for flash regeneration (90) and/or hot regeneration (94) of the scrubbing medium,
(f) supplying the liquid bottoms products (39, 82) from the separate H₂S scrubbers (4, 74) to an intermediate-pressure H₂S flash vessel (40), supplying the gaseous tops product (41) from the intermediate-pressure H₂S flash vessel (40) to the first stage (10, 11) or a subsequent stage (14, 15) of the multi-stage expander (10, 14) or into the conduit (15, 17) downstream of the expander (10, 14), supplying the liquid bottoms product (42) from the intermediate-pressure H₂S flash vessel (40) to a low-pressure H₂S flash vessel (45), supplying the gaseous tops product (47) from the low-pressure H₂S flash vessel (45) to the recompressor (31, 34), supplying the liquid bottoms product (46) from the low-pressure H₂S flash vessel (45) to at least one apparatus for flash regeneration (90) and/or hot regeneration (94) of the scrubbing medium,
(g) supplying the liquid bottoms products (49, 83) from the separate CO₂ scrubbers (6, 76) to an intermediate-pressure CO₂ flash vessel (50), supplying the gaseous tops product (51) from the intermediate-pressure CO₂ flash vessel (50) to the first stage (10, 11) or a subsequent stage (14, 15) of the multi-stage expander (10, 14) or into the conduit (15, 17) downstream of the expander (10, 14), supplying the liquid bottoms product (52) from the intermediate-pressure CO₂ flash vessel (50) to a low-pressure CO₂ flash vessel (55), supplying the gaseous tops product (57) from the low-pressure CO₂ flash vessel (55) to the low-pressure H₂S flash vessel (45) and/or to the recompressor (31, 34), supplying the liquid bottoms product (56) from the low-pressure CO₂ flash vessel (55) to at least one apparatus for flash regeneration (90) and/or hot regeneration (94) of the scrubbing medium,
(h) recycling the gas stream compressed by the recompressor (36) to the prescrubber (2, 72) for the unshifted crude synthesis gas and/or the shifted crude synthesis gas.

3. Process according to Claim 1 or 2, **characterized in that** the scrubbing medium comprises one or more components selected from the group of: methanol, N-methylpyrrolidone (NMP), secondary amines, preferably diethanolamine, tertiary amines, preferably methyldiethanolamine, polyethylene glycol dialkyl ethers, preferably polyethylene glycol dimethyl ether.

4. Process according to any of the preceding claims, **characterized in that** the first and/or the third synthesis gas partial product stream are at least partially added to a methanol synthesis gas product stream or form a methanol synthesis gas product stream.

5. Process according to Claim 4, **characterized in that** the first (7, 79) and the third synthesis gas partial product stream (77, 79) are at least partially added to a methanol synthesis gas product stream, wherein the particular proportion is chosen such that the H₂/CO ratio required for methanol synthesis is established.

6. Process according to any of the preceding claims, **characterized in that** the second expanded synthesis gas partial product stream (17) is added to a fuel gas product stream or forms a fuel gas product stream.

7. Process according to any of the preceding claims, **characterized in that** the fourth synthesis gas partial product stream (78) is added to a hydrogen product stream or forms a hydrogen product stream.

8. Process according to any of the preceding claims, **characterized in that** the recompressor (31, 34) is a multi-stage recompressor, wherein the gaseous tops products from the low-pressure flash vessels (24, 45, 55) are supplied to the first stage (31) and the gaseous tops products from the intermediate-pressure flash vessels (20, 40, 50) are supplied to a subsequent stage (34) of the multi-stage recompressor.

9. Plant for purifying a shifted crude synthesis gas (71) and an unshifted crude synthesis gas (1) by gas scrubbing with a scrubbing medium and for producing a plurality of synthesis gas product streams (17, 78, 79) having different H₂/CO ratios comprising the following constituents and assemblies in fluid connection with one another:
(a) means for providing and supplying the shifted crude synthesis gas and the unshifted crude synthesis gas to respective separate prescrubbers (2, 72), wherein the pre-scrubbers are suitable for removal of trace components such as NH₃, HCN, mercaptans, BTX aromatics,
(b) means for supplying the gaseous tops products (3, 73) from the prescrubbers to respective separate H₂S (4, 74) scrubbers for removal of H₂S,
(c) means for supplying the gaseous tops products (5, 75) from the H₂S scrubbers to respective separate CO₂ scrubbers (6, 76) for removal of CO₂,
(d1) means for dividing the gaseous tops product stream (7) from the CO₂ scrubber (6) for the unshifted crude synthesis gas into a first partial product stream (7, 79) and into a second partial product stream (7, 9), means for introducing the second partial product stream into a multi-stage expander (10, 14), means for discharging the expanded second partial product stream (15, 17) from the expander,
(d2) means for dividing the gaseous tops product stream (77) from the CO₂ scrubber (76) for the shifted crude synthesis gas into a third partial product stream (78) and into a fourth partial product stream (77, 79),
(e) means for supplying the liquid bottoms products (19, 81) from the separate prescrubbers to an intermediate-pressure prescrubbing flash vessel (20), means for supplying the gaseous tops product (21) from the intermediate-pressure prescrubbing flash vessel (20) to a recompressor (31, 34), means for supplying the liquid bottoms product (22) from the intermediate-pressure prescrubbing flash vessel (20) to a low-pressure prescrubbing flash vessel (24), means for supplying the gaseous tops product (25) from the low-pressure prescrubbing flash vessel (24) to the recompressor (31, 34), means for supplying the liquid bottoms product (26) from the low-pressure prescrubbing flash vessel (24) to at least one apparatus for flash regeneration (90) and/or hot regeneration (94) of the scrubbing medium,
(f) means for supplying the liquid bottoms products (39, 82) from the separate H₂S scrubbers (4, 74) to an intermediate-pressure H₂S flash vessel (40), means for supplying the gaseous tops product (41) from the intermediate-pressure H₂S flash vessel (40) to the recompressor (31, 34), means for supplying the liquid bottoms product (42) from the intermediate-pressure H₂S flash vessel (40) to a low-pressure H₂S flash vessel (45), means for supplying the gaseous tops product (47) from the low-pressure H₂S flash vessel (45) to the recompressor (31, 34), means for supplying the liquid bottoms product (46) from the low-pressure H₂S flash vessel (45) to at least one apparatus for flash regeneration (90) and/or hot regeneration (94) of the scrubbing medium,
(g) means for supplying the liquid bottoms products (49, 83) from the separate CO₂ scrubbers (6, 76) to an intermediate-pressure CO₂ flash vessel (50), means for supplying the gaseous tops product (51) from the intermediate-pressure CO₂ flash vessel (50) to the recompressor (31, 34), means for supplying the liquid bottoms product (52) from the intermediate-pressure CO₂ flash vessel (50) to a low-pressure CO₂ flash vessel (55), means for supplying the gaseous tops product (57) from the low-pressure CO₂ flash vessel (55) to the low-pressure H₂S flash vessel (45) and/or to the recompressor (31, 34), means for supplying the liquid bottoms product (56) from the low-pressure CO₂ flash vessel (55) to at least one apparatus for flash regeneration (90) and/or hot regeneration (94) of the scrubbing medium,
(h) means for recycling the gas stream compressed by the recompressor (31, 34) to the prescrubber (2, 72) for the unshifted crude synthesis gas and/or the shifted crude synthesis gas.

10. Plant for purifying a shifted crude synthesis gas and an unshifted crude synthesis gas by gas scrubbing with a scrubbing medium and for producing a plurality of synthesis gas product streams having different H₂/CO ratios comprising the following constituents and assemblies:
(a) means for providing and supplying the shifted crude synthesis gas and the unshifted crude synthesis gas to respective separate prescrubbers (2, 72), wherein the pre-scrubbers are suitable for removal of trace components such as NH₃, HCN, mercaptans, BTX aromatics,
(b) means for supplying the gaseous tops products (3, 73) from the prescrubbers to respective separate H₂S scrubbers (4, 74) for removal of H₂S,
(c) means for supplying the gaseous tops products (5, 75) from the H₂S scrubbers (4, 74) to respective separate CO₂ scrubbers (6, 76) for removal of CO₂,
(d1) means for dividing the gaseous tops product stream (7) from the CO₂ scrubber (6) for the unshifted crude synthesis gas into a first partial product stream (7, 79) and into a second partial product stream (7, 9), means for introducing the second partial product stream (7, 9) into a multi-stage expander (10, 14), means for discharging the expanded second partial product stream (15, 17) from the expander,
(d2) means for dividing the gaseous tops product stream (77) from the CO₂ scrubber (76) for the shifted crude synthesis gas into a third partial product stream (78) and into a fourth partial product stream (77, 79),
(e) means for supplying the liquid bottoms products (19, 81) from the separate prescrubbers to an intermediate-pressure prescrubbing flash vessel (20), means for supplying the gaseous tops product (21) from the intermediate-pressure prescrubbing flash vessel (20) to a recompressor (31, 34), means for supplying the liquid bottoms product (22) from the intermediate-pressure prescrubbing flash vessel (20) to a low-pressure prescrubbing flash vessel (24), means for supplying the gaseous tops product (25) from the low-pressure prescrubbing flash vessel (24) to the recompressor (31, 34), means for supplying the liquid bottoms product (26) from the low-pressure prescrubbing flash vessel (24) to at least one apparatus for flash regeneration (90) and/or hot regeneration (94) of the scrubbing medium,
(f) means for supplying the liquid bottoms products (39, 82) from the separate H₂S scrubbers (4, 74) to an intermediate-pressure H₂S flash vessel (40), means for supplying the gaseous tops product (41) from the intermediate-pressure H₂S flash vessel (40) to the first stage or a subsequent stage of the multi-stage expander (10, 14), means for supplying the liquid bottoms product (42) from the intermediate-pressure H₂S flash vessel (40) to a low-pressure H₂S flash vessel (45), means for supplying the gaseous tops product (47) from the low-pressure H₂S flash vessel to the recompressor (31, 34), means for supplying the liquid bottoms product (46) from the low-pressure H₂S flash vessel (45) to at least one apparatus for flash regeneration (90) and/or hot regeneration (94) of the scrubbing medium,
(g) means for supplying the liquid bottoms products (49, 83) from the separate CO₂ scrubbers (6, 76) to an intermediate-pressure CO₂ flash vessel (50), means for supplying the gaseous tops product (51) from the intermediate-pressure CO₂ flash vessel (50) to the second stage or a subsequent stage of the multi-stage expander (10, 14), means for supplying the liquid bottoms product (52) from the intermediate-pressure CO₂ flash vessel (50) to a low-pressure CO₂ flash vessel (55), means for supplying the gaseous tops product (57) from the low-pressure CO₂ flash vessel to the low-pressure H₂S flash vessel (45) and/or to the recompressor (31, 34), means for supplying the liquid bottoms product (56) from the low-pressure CO₂ flash vessel (55) to at least one apparatus for flash regeneration (90) and/or hot regeneration (94) of the scrubbing medium,
(h) means for recycling the gas stream compressed by the recompressor (36) to the prescrubber (2, 72) for the unshifted crude synthesis gas and/or the shifted crude synthesis gas.

## Revendications

1. Procédé pour la purification d'un gaz de synthèse brut converti (71) et d'un gaz de synthèse brut non converti (1) par lavage de gaz avec un agent de lavage et pour la production de plusieurs courants de produit de gaz de synthèse (17, 78, 79) ayant un rapport H₂/CO différent, comprenant les étapes suivantes :
(a) la fourniture et l'amenée du gaz de synthèse brut converti et du gaz de synthèse brut non converti à respectivement un laveur préliminaire séparé (2, 72) pour l'élimination de composants à l'état de traces tels que du NH₃, de l'HCN, des mercaptans, des aromatiques BTX,
(b) l'amenée des produits de tête gazeux (3, 73) des laveurs préliminaires à respectivement un laveur d'H₂S séparé (4, 74) pour l'élimination d'H₂S,
(c) l'amenée des produits de tête gazeux (5, 75) des laveurs d'H₂S (4, 74) à respectivement un laveur de CO₂ séparé (6, 76) pour l'élimination de CO₂,
(d1) la division du courant de produit de tête gazeux (7) du laveur de CO₂ (6) du gaz de synthèse brut non converti en un premier courant de produit partiel de gaz de synthèse (7, 79) et en un deuxième courant de produit partiel de gaz de synthèse (7, 9), qui passe par un expanseur (10, 14), de préférence à plusieurs étages, pour l'abaissement de la pression, du travail mécanique et du froid étant récupérés et un deuxième courant de produit partiel de gaz de synthèse expansé (15, 17) étant obtenu,
(d2) la division du courant de produit de tête gazeux (77) du laveur de CO₂ (76) du gaz de synthèse brut converti en un troisième courant de produit partiel de gaz de synthèse (78) et en un quatrième courant de produit partiel de gaz de synthèse (77, 79),
(e) l'amenée des produits de fond liquides (19, 81) des laveurs préliminaires séparés à un contenant flash de lavage préliminaire à moyenne pression (20), l'amenée du produit de tête gazeux (21) du contenant flash de lavage préliminaire à moyenne pression (20) à un recompresseur (31, 34), l'amenée du produit de fond liquide (22) du contenant flash de lavage préliminaire à moyenne pression (20) à un contenant flash de lavage préliminaire à basse pression (24), l'amenée du produit de tête gazeux (25) du contenant flash de lavage préliminaire à basse pression (24) au recompresseur (31, 34), l'amenée du produit de fond liquide (26) du contenant flash de lavage préliminaire à basse pression (24) à au moins un dispositif de régénération flash (90) et/ou de régénération à chaud (94) de l'agent de lavage,
(f) l'amenée des produits de fond liquides (39, 82) du laveur d'H₂S séparé (4, 74) à un contenant flash d'H₂S à moyenne pression (40), l'amenée du produit de tête gazeux (41) du contenant flash d'H₂S à moyenne pression (40) au recompresseur (31, 34), l'amenée du produit de fond liquide (42) du contenant flash d'H₂S à moyenne pression (40) à un contenant flash d'H₂S à basse pression (45), l'amenée du produit de tête gazeux (47) du contenant flash d'H₂S à basse pression (45) au recompresseur (31, 34), l'amenée du produit de fond liquide (46) du contenant flash d'H₂S à basse pression (45) à au moins un dispositif de régénération flash (90) et/ou de régénération à chaud (94) de l'agent de lavage,
(g) l'amenée des produits de fond liquides (49, 83) du laveur de CO₂ séparé (6, 76) à un contenant flash de CO₂ à moyenne pression (50), l'amenée du produit de tête gazeux (51) du contenant flash de CO₂ à moyenne pression (50) au recompresseur (31, 34), l'amenée du produit de fond liquide (52) du contenant flash de CO₂ à moyenne pression (50) à un contenant flash de CO₂ à basse pression (55), l'amenée du produit de tête gazeux (57) du contenant flash de CO₂ à basse pression (55) au contenant flash d'H₂S à basse pression (45) et/ou au recompresseur (31, 34), l'amenée du produit de fond liquide (56) du contenant flash de CO₂ à basse pression (55) à au moins un dispositif de régénération flash (90) et/ou de régénération à chaud (94) de l'agent de lavage,
(h) le recyclage du courant de gaz (36) comprimé au moyen du recompresseur (31, 34) vers le laveur préliminaire (2, 72) pour le gaz de synthèse brut non converti et/ou le gaz de synthèse brut converti.

2. Procédé pour la purification d'un gaz de synthèse brut converti (71) et d'un gaz de synthèse brut non converti (1) par lavage de gaz avec un agent de lavage et pour la production de plusieurs courants de produit de gaz de synthèse (17, 78, 79) ayant un rapport H₂/CO différent, comprenant les étapes suivantes :
(a) la fourniture et l'amenée du gaz de synthèse brut converti et du gaz de synthèse brut non converti à respectivement un laveur préliminaire séparé (2, 72) pour l'élimination de composants à l'état de traces tels que du NH₃, de l'HCN, des mercaptans, des aromatiques BTX,
(b) l'amenée des produits de tête gazeux (3, 73) des laveurs préliminaires à respectivement un laveur d'H₂S séparé (4, 74) pour l'élimination d'H₂S,
(c) l'amenée des produits de tête gazeux (5, 75) des laveurs d'H₂S (4, 74) à respectivement un laveur de CO₂ séparé (6, 76) pour l'élimination de CO₂,
(d1) la division du courant de produit de tête gazeux (7) du laveur de CO₂ (6) du gaz de synthèse brut non converti en un premier courant de produit partiel de gaz de synthèse (7, 79) et en un deuxième courant de produit partiel de gaz de synthèse (7, 9), qui passe par un expanseur (10, 14), de préférence à plusieurs étages, pour l'abaissement de la pression, du travail mécanique et du froid étant récupérés et un deuxième courant de produit partiel de gaz de synthèse expansé (15, 17) étant obtenu,
(d2) la division du courant de produit de tête gazeux (77) du laveur de CO₂ (76) du gaz de synthèse brut converti en un troisième courant de produit partiel de gaz de synthèse (78) et en un quatrième courant de produit partiel de gaz de synthèse (77, 79),
(e) l'amenée des produits de fond liquides (19, 81) des laveurs préliminaires séparés à un contenant flash de lavage préliminaire à moyenne pression (20), l'amenée du produit de tête gazeux (21) du contenant flash de lavage préliminaire à moyenne pression (20) à un recompresseur (31, 34), l'amenée du produit de fond liquide (22) du contenant flash de lavage préliminaire à moyenne pression (20) à un contenant flash de lavage préliminaire à basse pression (24), l'amenée du produit de tête gazeux (25) du contenant flash de lavage préliminaire à basse pression (24) au recompresseur (31, 34), l'amenée du produit de fond liquide (26) du contenant flash de lavage préliminaire à basse pression (24) à au moins un dispositif de régénération flash (90) et/ou de régénération à chaud (94) de l'agent de lavage,
(f) l'amenée des produits de fond liquides (39, 82) des laveurs d'H₂S séparés (4, 74) à un contenant flash d'H₂S à moyenne pression (40), l'amenée du produit de tête gazeux (41) du contenant flash d'H₂S à moyenne pression (40) au premier étage (10, 11) ou à un étage suivant (14, 15) de l'expanseur à plusieurs étages (10, 14) ou dans la conduite (15, 17) en aval de l'expanseur (10, 14), l'amenée du produit de fond liquide (42) du contenant flash d'H₂S à moyenne pression (40) à un contenant flash d'H₂S à basse pression (45), l'amenée du produit de tête gazeux (47) du contenant flash d'H₂S à basse pression (45) au recompresseur (31, 34), l'amenée du produit de fond liquide (46) du contenant flash d'H₂S à basse pression (45) à au moins un dispositif de régénération flash (90) et/ou de régénération à chaud (94) de l'agent de lavage,
(g) l'amenée des produits de fond liquides (49, 83) des laveurs de CO₂ séparés (6, 76) à un contenant flash de CO₂ à moyenne pression (50), l'amenée du produit de tête gazeux (51) du contenant flash de CO₂ à moyenne pression (50) au premier étage (10, 11) ou à un étage suivant (14, 15) de l'expanseur à plusieurs étages (10, 14) ou dans la conduite (15, 17) en aval de l'expanseur (10, 14), l'amenée du produit de fond liquide (52) du contenant flash de CO₂ à moyenne pression (50) à un contenant flash de CO₂ à basse pression (55), l'amenée du produit de tête gazeux (57) du contenant flash de CO₂ à basse pression (55) au contenant flash d'H₂S à basse pression (45) et/ou au recompresseur (31, 34), l'amenée du produit de fond liquide (56) du contenant flash de CO₂ à basse pression (55) à au moins un dispositif de régénération flash (90) et/ou de régénération à chaud (94) de l'agent de lavage,
(h) le recyclage du courant de gaz (36) comprimé au moyen du recompresseur vers le laveur préliminaire (2, 72) pour le gaz de synthèse brut non converti et/ou le gaz de synthèse brut converti.

3. Procédé selon la revendication 1 ou 2, **caractérisé en ce que** l'agent de lavage contient un ou plusieurs composants choisis dans le groupe suivant : méthanol, N-méthylpyrrolidone (NMP), amines secondaires, de préférence diéthanolamine, amines tertiaires, de préférence méthyldiéthanolamine, éther dialkylique de polyéthylèneglycol, de préférence éther diméthylique de polyéthylèneglycol.

4. Procédé selon l'une quelconque des revendications précédentes, **caractérisé en ce que** le premier et/ou le troisième courant de produit partiel de gaz de synthèse sont ajoutés au moins partiellement à un courant de produit de gaz de synthèse de méthanol ou forment un courant de produit de gaz de synthèse de méthanol.

5. Procédé selon la revendication 4, **caractérisé en ce que** le premier (7, 79) et le troisième courant de produit partiel de gaz de synthèse (77, 79) sont ajoutés au moins partiellement à un courant de produit de gaz de synthèse de méthanol, la proportion respective étant choisie de telle sorte que le rapport H₂/CO nécessaire à la synthèse de méthanol est ajusté.

6. Procédé selon l'une quelconque des revendications précédentes, **caractérisé en ce que** le deuxième courant de produit partiel de gaz de synthèse expansé (17) est ajouté à un courant de produit de gaz de combustion ou forme un courant de produit de gaz de combustion.

7. Procédé selon l'une quelconque des revendications précédentes, **caractérisé en ce que** le quatrième courant de produit partiel de gaz de synthèse (78) est ajouté à un courant de produit d'hydrogène ou forme un courant de produit d'hydrogène.

8. Procédé selon l'une quelconque des revendications précédentes, **caractérisé en ce que** le recompresseur est réalisé à plusieurs étages (31, 34), les produits de tête gazeux provenant des contenants flash à basse pression (24, 45, 55) du premier étage (31) et les produits de tête gazeux provenant des contenant flash à moyenne pression (20, 40, 50) étant amenés à un étage suivant (34) du recompresseur à plusieurs étages.

9. Installation pour la purification d'un gaz de synthèse brut converti (71) et d'un gaz de synthèse brut non converti (1) par lavage de gaz avec un agent de lavage et pour la production de plusieurs courants de produit de gaz de synthèse (17, 78, 79) ayant un rapport H₂/CO différent, comprenant les constituants et modules suivants en liaison fluidique les uns avec les autres :
(a) des moyens pour fournir et amener le gaz de synthèse brut converti et le gaz de synthèse brut non converti à respectivement un laveur préliminaire séparé (2, 72), les laveurs préliminaires étant appropriés pour l'élimination de composants à l'état de traces tels que du NH₃, de l'HCN, des mercaptans, des aromatiques BTX,
(b) des moyens pour amener les produits de tête gazeux (3, 73) des laveurs préliminaires à respectivement un laveur d'H₂S séparé (4, 74) pour l'élimination d'H₂S,
(c) des moyens pour amener les produits de tête gazeux (5, 75) des laveurs d'H₂S à respectivement un laveur de CO₂ séparé (6, 76) pour l'élimination de CO₂,
(d1) des moyens pour diviser le courant de produit de tête gazeux (7) du laveur de CO₂ (6) du gaz de synthèse brut non converti en un premier courant de produit partiel (7, 79) et en un deuxième courant de produit partiel (7, 9), des moyens pour introduire le deuxième courant de produit partiel dans un expanseur à plusieurs étages (10, 14), des moyens pour évacuer le deuxième courant de produit partiel expansé (15, 17) de l'expanseur,
(d2) des moyens pour diviser le courant de produit de tête gazeux (77) du laveur de CO₂ (76) du gaz de synthèse brut converti en un troisième courant de produit partiel (78) et en un quatrième courant de produit partiel (77, 79),
(e) des moyens pour amener les produits de fond liquides (19, 81) des laveurs préliminaires séparés à un contenant flash de lavage préliminaire à moyenne pression (20), des moyens pour amener le produit de tête gazeux (21) du contenant flash de lavage préliminaire à moyenne pression (20) à un recompresseur (31, 34), des moyens pour amener le produit de fond liquide (22) du contenant flash de lavage préliminaire à moyenne pression (20) à un contenant flash de lavage préliminaire à basse pression (24), des moyens pour amener le produit de tête gazeux (25) du contenant flash de lavage préliminaire à basse pression (24) au recompresseur (31, 34), des moyens pour amener le produit de fond liquide (26) du contenant flash de lavage préliminaire à basse pression (24) à au moins un dispositif de régénération flash (90) et/ou de régénération à chaud (94) de l'agent de lavage,
(f) des moyens pour amener les produits de fond liquides (39, 82) des laveurs d'H₂S séparés (4, 74) à un contenant flash d'H₂S à moyenne pression (40), des moyens pour amener le produit de tête gazeux (41) du contenant flash d'H₂S à moyenne pression (40) au recompresseur (31, 34), des moyens pour amener le produit de fond liquide (42) du contenant flash d'H₂S à moyenne pression (40) à un contenant flash d'H₂S à basse pression (45), des moyens pour amener le produit de tête gazeux (47) du contenant flash d'H₂S à basse pression (45) au recompresseur (31, 34), des moyens pour amener le produit de fond liquide (46) du contenant flash d'H₂S à basse pression (45) à au moins un dispositif pour la régénération flash (90) et/ou la régénération à chaud (94) de l'agent de lavage,
(g) des moyens pour amener les produits de fond liquides (49, 83) des laveurs de CO₂ séparés (6, 76) à un contenant flash de CO₂ à moyenne pression (50), des moyens pour amener le produit de tête gazeux (51) du contenant flash de CO₂ à moyenne pression (50) au recompresseur (31, 34), des moyens pour amener le produit de fond liquide (52) du contenant flash de CO₂ à moyenne pression (50) à un contenant flash de CO₂ à basse pression (55), des moyens pour amener le produit de tête gazeux (57) du contenant flash de CO₂ à basse pression (55) au contenant flash d'H₂S à basse pression (45) et/ou au recompresseur (31, 34), des moyens pour amener le produit de fond liquide (56) du contenant flash de CO₂ à basse pression (55) à au moins un dispositif de régénération flash (90) et/ou de régénération à chaud (94) de l'agent de lavage,
(h) des moyens pour recycler le courant de gaz comprimé au moyen du recompresseur (31, 34) vers le laveur préliminaire (2, 72) pour le gaz de synthèse brut non converti et/ou le gaz de synthèse brut converti.

10. Installation pour la purification d'un gaz de synthèse brut converti et d'un gaz de synthèse brut non converti par lavage de gaz avec un agent de lavage et pour la production de plusieurs courants de produit de gaz de synthèse ayant un rapport H₂/CO différent, comprenant les constituants et modules suivants :
(a) des moyens pour fournir et amener le gaz de synthèse brut converti et le gaz de synthèse brut non converti à respectivement un laveur préliminaire séparé (2, 72), les laveurs préliminaires étant appropriés pour l'élimination de composants à l'état de traces tels que du NH₃, de l'HCN, des mercaptans, des aromatiques BTX,
(b) des moyens pour amener les produit de tête gazeux (3, 73) des laveurs préliminaires à respectivement un laveur d'H₂S séparé (4, 74) pour l'élimination d'H₂S,
(c) des moyens pour amener les produits de tête gazeux (5, 75) des laveurs d'H₂S (4, 74) à respectivement un laveur de CO₂ séparé (6, 76) pour l'élimination de CO₂,
(d1) des moyens pour diviser le courant de produit de tête gazeux (7) du laveur de CO₂ (6) du gaz de synthèse brut non converti en un premier courant de produit partiel (7, 79) et en un deuxième courant de produit partiel (7, 9), des moyens pour introduire le deuxième courant de produit partiel (7, 9) dans un expanseur à plusieurs étages (10, 14), des moyens pour évacuer le deuxième courant de produit partiel expansé (15, 17) de l'expanseur,
(d2) des moyens pour diviser le courant de produit de tête gazeux (77) du laveur de CO₂ (76) du gaz de synthèse brut converti en un troisième courant de produit partiel (78) et en un quatrième courant de produit partiel (77, 79),
(e) des moyens pour amener les produits de fond liquides (19, 81) des laveurs préliminaires séparés à un contenant flash de lavage préliminaire à moyenne pression (20), des moyens pour amener le produit de tête gazeux (21) du contenant flash de lavage préliminaire à moyenne pression (20) à un recompresseur (31, 34), des moyens pour amener le produit de fond liquide (22) du contenant flash de lavage préliminaire à moyenne pression (20) à un contenant flash de lavage préliminaire à basse pression (24), des moyens pour amener le produit de tête gazeux (25) du contenant flash de lavage préliminaire à basse pression (24) au recompresseur (31, 34), des moyens pour amener le produit de fond liquide (26) du contenant flash de lavage préliminaire à basse pression (24) à au moins un dispositif de régénération flash (90) et/ou de régénération à chaud (94) de l'agent de lavage,
(f) des moyens pour amener les produits de fond liquides (39, 82) des laveurs d'H₂S séparés (4, 74) à un contenant flash d'H₂S à moyenne pression (40), des moyens pour amener le produit de tête gazeux (41) du contenant flash d'H₂S à moyenne pression (40) au premier étage ou à un étage suivant de l'expanseur à plusieurs étages (10, 14), des moyens pour amener le produit de fond liquide (42) du contenant flash d'H₂S à moyenne pression (40) à un contenant flash d'H₂S à basse pression (45), des moyens pour amener le produit de tête gazeux (47) du contenant flash d'H₂S à basse pression au recompresseur (31, 34), des moyens pour amener le produit de fond liquide (46) du contenant flash d'H₂S à basse pression (45) à au moins un dispositif de régénération flash (90) et/ou de régénération à chaud (94) de l'agent de lavage,
(g) des moyens pour amener les produits de fond liquides (49, 83) des laveurs de CO₂ séparés (6, 76) à un contenant flash de CO₂ à moyenne pression (50), des moyens pour amener le produit de tête gazeux (51) du contenant flash de CO₂ à moyenne pression (50) au deuxième étage ou à un étage suivant de l'expanseur à plusieurs étages (10, 14), des moyens pour amener le produit de fond liquide (52) du contenant flash de CO₂ à pression moyenne (50) à un contenant flash de CO₂ à basse pression (55), des moyens pour amener le produit de tête gazeux (57) du contenant flash de CO₂ à basse pression au contenant flash d'H₂S à basse pression (45) et/ou au recompresseur (31, 34), des moyens pour amener le produit de fond liquide (56) du contenant flash de CO₂ à basse pression (55) à au moins un dispositif de régénération flash (90) et/ou de régénération à chaud (94) de l'agent de lavage,
(h) des moyens pour recycler le courant de gaz (36) comprimé au moyen du recompresseur vers le laveur préliminaire (2, 72) pour le gaz de synthèse brut non converti et/ou le gaz de synthèse brut converti.
